# EUROPEAN PATENT APPLICATION

(11) **EP 4 593 456 A1**
(43) Date of publication of application: **30.07.2025**
(21) Application number: 23870606.3
(22) Date of filing: 22.09.2023
(51) Int. Cl.: H04W 28/04, H04N 19/164

(54) **COMMUNICATION METHOD AND APPARATUS**

(30) Priority: 30.09.2022 CN 202211216569
(71) Applicant: Huawei Technologies Co., Ltd., Shenzhen, Guangdong 518129 (CN)
(72) Inventor: TANG, Xiaowei, Shenzhen, Guangdong 518129 (CN); FAN, Qiang, Shenzhen, Guangdong 518129 (CN); WANG, Jue, Shenzhen, Guangdong 518129 (CN); LOU, Chong, Shenzhen, Guangdong 518129 (CN); ZHOU, Guohua, Shenzhen, Guangdong 518129 (CN)
(74) Representative: Gill Jennings & Every LLP
(86) International application number: PCT/CN2023/120545
(87) International publication number: WO 2024/067374

(57) **Abstract**

This application relates to the field of communication technologies, and discloses a communication method and apparatus. The method includes: After determining that transmission of a first data frame fails, an access stratum of a terminal sends first indication information to an application layer of the terminal, where the first indication information indicates that transmission of the first data frame fails. **In** other words, the access stratum of the terminal may notify the application layer of the terminal that transmission of the first data frame fails, so that the application layer of the terminal can adjust a coding scheme of a subsequent data frame in a timely manner, thereby improving a probability of successfully decoding the subsequent data frame.

## Description

### CROSS-REFERENCE TO RELATED APPLICATIONS

This application claims priority to Chinese Patent Application No. 202211216569.2, filed with the China National Intellectual Property Administration on September 30, 2022 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

With continuous development of a wireless communication system, a data transmission delay is continuously reduced, and a transmission capacity is increasingly large. Some services with high real-time performance and high data capacity requirements, such as video transmission, cloud gaming (cloud gaming, CG), and extended reality (extended reality, XR), are gradually penetrated into the wireless communication system. The XR refers to an environment that is generated by using a computer technology and a wearable device and that combines a real world and a virtual world and that is capable of human-computer interaction, and is a general term of various forms such as augmented reality (augmented reality, AR), virtual reality (virtual reality, VR), and mixed reality (mixed reality, MR).

An XR service is used as an example. There may be a dependency relationship between different data frames of the XR service. Therefore, when decoding of a data frame fails, decoding of one or more subsequent data frames may fail.

### SUMMARY

This application provides a communication method and apparatus, to feed back a data frame transmission failure to an application layer of an encoder side in a timely manner, so that the application layer of the encoder side adjusts a coding scheme of a subsequent data frame, thereby improving a probability of successfully decoding the subsequent data frame.

According to a first aspect, an embodiment of this application provides a communication method. The method may be applied to a terminal or a component (for example, a circuit or a chip) in the terminal. For example, the method is applied to the terminal. In the method, an access stratum of the terminal determines that transmission of a first data frame fails; and the access stratum of the terminal sends first indication information to an application layer of the terminal, where the first indication information indicates that transmission of the first data frame fails.

According to the method, the access stratum of the terminal feeds back the first indication information to the application layer of the terminal after determining that transmission of the first data frame fails (a first data frame transmission failure causes a failure in decoding the first data frame by a decoder side). In comparison with a solution in which the decoder side feeds back a data frame whose decoding fails, a feedback delay is short, so that the application layer of the terminal can adjust a coding scheme of a subsequent data frame in a timely manner, thereby improving a probability of successfully decoding the subsequent data frame.

In a possible design, that the access stratum of the terminal sends first indication information to an application layer of the terminal includes: The access stratum of the terminal sends an attention AT command to an operating system OS layer of the terminal, where the AT command includes the first indication information; and the OS layer of the terminal sends the first indication information to the application layer.

In a possible design, that the OS layer of the terminal sends the first indication information to the application layer includes: The OS layer of the terminal sends the first indication information to the application layer by invoking an application programming interface API.

In this way, a new AT command is designed, to cause the access stratum of the terminal to send the first indication information to the OS layer of the terminal by using the AT command; and a new API is designed, to cause the OS layer of the terminal to send the first indication information to the application layer of the terminal through the API, so that the application layer of the terminal can adjust a coding scheme of a subsequent data frame in a timely manner, thereby improving a probability of successfully decoding the subsequent data frame.

In a possible design, the first indication information includes at least one of the following: a transmission failure indication; an identifier of the first data frame; or type information of the first data frame.

In a possible design, the first data frame is an uplink data frame; and that an access stratum of the terminal determines that transmission of a first data frame fails includes: When a quantity of data packets whose transmission fails in the first data frame is greater than or equal to a first threshold, the access stratum of the terminal determines that transmission of the first data frame fails; or when a ratio of a quantity of data packets whose transmission fails in the first data frame to a total quantity of data packets in the first data frame is greater than or equal to a second threshold, the access stratum of the terminal determines that transmission of the first data frame fails.

When the quantity of data packets whose transmission fails in the first data frame is small, the first data frame may be successfully decoded. **In** this case, there is no need to adjust a coding scheme of a subsequent data frame, and there is also no need to feed back a first data frame transmission failure to the application layer of the terminal. Therefore, in this embodiment of this application, when the quantity of data packets whose transmission fails in the first data frame is greater than or equal to a threshold (that is, the quantity of data packets whose transmission fails in the first data frame is large, which may cause a first data frame decoding failure), the access stratum of the terminal may determine that transmission of the first data frame fails, and feed back the first data frame transmission failure to the application layer of the terminal, to properly adjust the coding scheme of the subsequent data frame.

In a possible design, the first data frame is an uplink data frame or a downlink data frame; and that an access stratum of the terminal determines that transmission of a first data frame fails includes: receiving, by the access stratum of the terminal, second indication information from an access network device, where the second indication information indicates that transmission of the first data frame fails; and determining, based on the second indication information, that transmission of the first data frame fails.

In this way, the access stratum of the terminal may directly determine, based on the second indication information from the access network device, that transmission of the first data frame fails, and the terminal does not need to perform a determining operation. This reduces power consumption of the terminal.

In a possible design, when the first data frame is a downlink data frame, the method further includes: The application layer of the terminal sends an application layer message to an application server, where the application layer message includes the first indication information.

In this way, the terminal may notify, by using the application layer message, the application server that transmission of the first data frame fails (a core network element does not parse the application layer message), so that modification to related content of a core network in an existing protocol can be avoided, and implementation is convenient.

In a possible design, the method further includes: The access stratum of the terminal receives coding recommendation information from the access network device, where the coding recommendation information is used to adjust a coding scheme of a data frame after the first data frame; and the access stratum of the terminal sends the coding recommendation information to the application layer of the terminal.

In this way, the access stratum of the access network device may determine the coding recommendation information based on a plurality of types of possible information (for example, determine the coding recommendation information based on an air interface transmission capability), so that a coding scheme recommended in the coding recommendation information is appropriate. Further, when the application layer of the terminal adjusts a coding scheme of a subsequent data frame based on the coding recommendation information of the access network device, a probability of successfully decoding the subsequent data frame can be effectively improved.

In a possible design, the coding recommendation information includes at least one of the following: first information, where the first information indicates a recommended coding type for encoding at least one data frame after the first data frame; second information, where the second information indicates a recommended size of a group of pictures GOP; or third information, where the third information indicates a recommended coding rate.

In a possible design, the method further includes: sending fourth information to the access network device, where the fourth information is used to determine the coding recommendation information.

In a possible design, the fourth information includes at least one of the following: a coding type of the first data frame; location information of the first data frame in a GOP; a size of the GOP; importance of the first data frame; or a coding rate used by the application layer of the terminal.

In a possible design, when the first data frame is a downlink data frame, the method further includes: The application layer of the terminal sends the coding recommendation information to the application server. For example, the application layer of the terminal sends the coding recommendation information to the application server by using the application layer message. The core network element does not parse the application layer message, so that modification to the related content of the core network in the existing protocol can be avoided, and implementation is convenient.

According to a second aspect, an embodiment of this application provides a communication method. The method may be applied to an access network device or a component (for example, a circuit or a chip) in the access network device. For example, the method is applied to the access network device. In the method, an access stratum of the access network device determines that transmission of a first data frame fails, where the first data frame is an uplink data frame or a downlink data frame; and the access stratum of the access network device sends second indication information to a terminal, where the second indication information indicates that transmission of the first data frame fails.

According to the method, the access stratum of the access network device may notify an access stratum of the terminal after determining that transmission of the first data frame fails, and then the access stratum of the terminal notifies an application layer of the terminal. In comparison with a solution in which a decoder side feeds back a data frame whose decoding fails, a feedback delay is short, so that the application layer of the terminal can adjust a coding scheme of a subsequent data frame in a timely manner, thereby improving a probability of successfully decoding the subsequent data frame.

In a possible design, that an access stratum of the access network device determines that transmission of a first data frame fails includes: When a quantity of data packets whose transmission fails in the first data frame is greater than or equal to a fourth threshold, the access stratum of the access network device determines that transmission of the first data frame fails; or when a ratio of a quantity of data packets whose transmission fails in the first data frame to a total quantity of data packets in the first data frame is greater than or equal to a fifth threshold, the access stratum of the access network device determines that transmission of the first data frame fails.

In a possible design, the method further includes: obtaining the threshold from the terminal or a core network element.

In a possible design, the second indication information includes at least one of the following: a transmission failure indication; an identifier of the first data frame; or a type of the first data frame.

In a possible design, the method further includes: The access stratum of the access network device sends coding recommendation information to the terminal, where the coding recommendation information is used to adjust a coding scheme of a data frame after the first data frame.

In a possible design, the coding recommendation information includes at least one of the following: first information, where the first information indicates a recommended coding type for encoding at least one data frame after the first data frame; second information, where the second information indicates a recommended size of a GOP; or third information, where the third information indicates a recommended coding rate.

In a possible design, the method further includes: receiving fourth information from the terminal or the core network element, where the fourth information is used to determine the coding recommendation information.

In a possible design, the fourth information includes at least one of the following: a coding type of the first data frame; location information of the first data frame in a GOP; a size of the GOP; importance of the first data frame; or a coding rate used by the application layer of the terminal.

It may be understood that the method described in the second aspect corresponds to the method described in the first aspect. For beneficial effects of related technical features in the second aspect, refer to the descriptions in the first aspect. Details are not described again.

According to a third aspect, this application provides a communication apparatus. The communication apparatus has a function for implementing the first aspect or the second aspect. For example, the communication apparatus includes a corresponding module, unit, or means (means) for performing an operation in the first aspect or the second aspect. The module, unit, or means may be implemented by using software, may be implemented by using hardware, or may be implemented by using hardware executing corresponding software.

In a possible design, the communication apparatus includes a processing unit and a communication unit. The communication unit may be configured to receive and transmit a signal, to implement communication between the communication apparatus and another apparatus. The processing unit may be configured to perform some internal operations of the communication apparatus. Functions performed by the processing unit and the communication unit may correspond to operations in the first aspect or the second aspect.

In a possible design, the communication apparatus includes a processor, and the processor may be coupled to a memory. The memory may store a computer program or instructions necessary for implementing the function in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and a memory. The memory may store a computer program or instructions necessary for implementing the function in the first aspect or the second aspect. The processor may execute the computer program or the instructions stored in the memory. When the computer program or the instructions are executed, the communication apparatus is enabled to implement the method in any possible design or implementation of the first aspect or the second aspect.

In a possible design, the communication apparatus includes a processor and an interface circuit. The processor is configured to: communicate with another apparatus through the interface circuit, and perform the method in any possible design or implementation of the first aspect or the second aspect.

It may be understood that, in the third aspect, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. In addition, there may be one or more processors, and one or more memories. The memory may be integrated with the processor, or the memory and the processor are separately disposed. In a specific implementation process, the memory and the processor may be integrated on a same chip, or may be separately disposed on different chips. A type of the memory and a manner of disposing the memory and the processor are not limited in embodiments of this application.

According to a fourth aspect, this application provides a communication system. The communication system may include a terminal and an access network device. The terminal is configured to perform the communication method provided in the first aspect, and the access network device is configured to perform the communication method provided in the second aspect.

According to a fifth aspect, this application provides a computer-readable storage medium. The computer storage medium stores computer-readable instructions. When a computer reads and executes the computer-readable instructions, the computer is enabled to perform the method in any one of the possible designs of the first aspect or the second aspect.

According to a sixth aspect, this application provides a computer program product. When a computer reads and executes the computer program product, the computer is enabled to perform the method in any one of the possible designs of the first aspect or the second aspect.

According to a seventh aspect, this application provides a chip. The chip includes a processor, and the processor is coupled to a memory, and is configured to read and execute a software program stored in the memory, to implement the method in any one of the possible designs of the first aspect or the second aspect.

### BRIEF DESCRIPTION OF DRAWINGS

FIG. 1 is a diagram of a network architecture to which an embodiment of this application is applicable;
FIG. 2A is a diagram of transmission of a plurality of video frames according to an embodiment of this application;
FIG. 2B is a diagram of GOPs according to an embodiment of this application;
FIG. 3 is a diagram of data transmission between layers according to an embodiment of this application;
FIG. 4 is a diagram of communication between an access stratum of a terminal and an application layer of the terminal according to an embodiment of this application;
FIG. 5 is a schematic flowchart corresponding to a communication method according to Embodiment 1 of this application;
FIG. 6 is a diagram of coding scheme adjustment according to an embodiment of this application;
FIG. 7 is a diagram of coding scheme adjustment according to an embodiment of this application;
FIG. 8 is a schematic flowchart corresponding to a communication method according to Embodiment 2 of this application;
FIG. 9 is a schematic flowchart corresponding to a communication method according to Embodiment 3 of this application;
FIG. 10 is a schematic flowchart corresponding to a communication method according to Embodiment 4 of this application;
FIG. 11 is a schematic flowchart corresponding to a communication method according to Embodiment 5 of this application;
FIG. 12 is a schematic flowchart corresponding to a communication method according to Embodiment 6 of this application;
FIG. 13 is a possible example block diagram of an apparatus according to an embodiment of this application;
FIG. 14 is a diagram of a structure of a terminal according to an embodiment of this application; and
FIG. 15 is a diagram of a structure of an access network device according to an embodiment of this application.

### DESCRIPTION OF EMBODIMENTS

The following describes technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a fourth generation (4th generation, 4G) mobile communication system such as a long term evolution (long term evolution, LTE) system, a fifth generation (5th generation, 5G) mobile communication system such as a new radio (new radio, NR) system, and a future evolved communication system such as a sixth generation (6th generation, 6G) mobile communication system.

Each aspect, embodiment, or feature is presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the word "example" is used to present a concept in a specific manner. In embodiments of this application, "of (of)", "relevant (corresponding, relevant)", and "corresponding (corresponding)" may be interchangeably used sometimes. It should be noted that meanings expressed by the terms are consistent when differences are not emphasized.

A communication system and a service scenario described in embodiments of this application are intended to describe the technical solutions in embodiments of this application more clearly, and do not constitute a limitation on the technical solutions provided in embodiments of this application. A person of ordinary skill in the art may learn that the technical solutions provided in embodiments of this application are also applicable to a similar technical problem as a network architecture evolves and a new service scenario emerges.

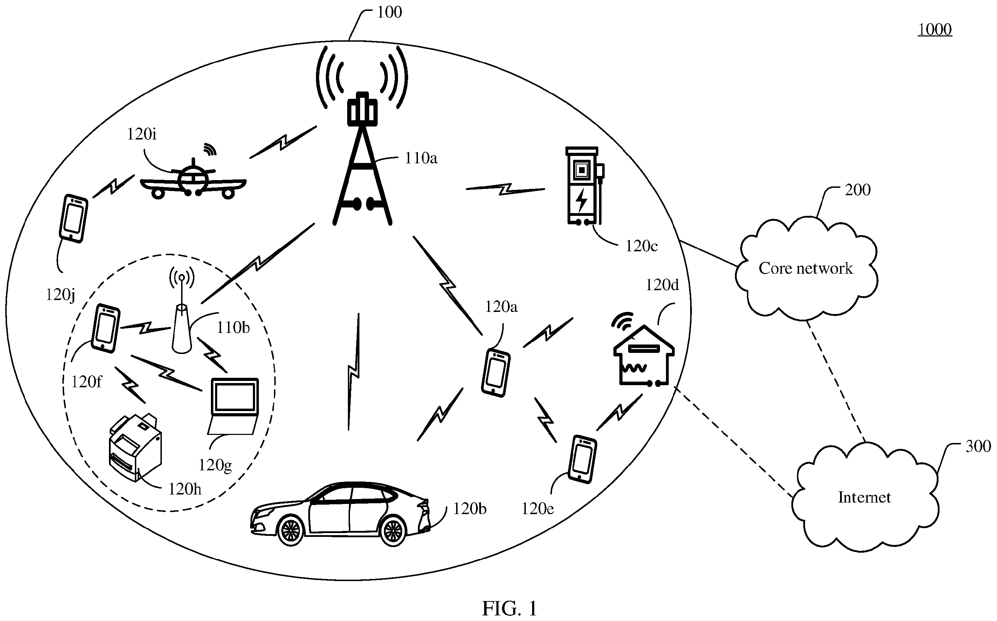

For ease of understanding embodiments of this application, a communication system shown in FIG. 1 is first used as an example to describe in detail a communication system applicable to embodiments of this application. As shown in FIG. 1, a radio access network (radio access network, RAN) 100 and a core network (core network, CN) 200 are included. Optionally, the communication system 1000 may further include an internet 300.

### 1. Radio access network 100

The radio access network 100 may include at least one radio access network device (which may also be referred to as an access network device, for example, 110a and 110b in FIG. 1), and may further include at least one terminal (for example, 120a to 120j in FIG. 1). 110a is a base station, 110b is a micro base station, 120a, 120e, 120f, and 120j are mobile phones, 120b is a vehicle, 120c is a fuel dispenser, 120d is a home access point (home access point, HAP) deployed indoors or outdoors, 120g is a notebook computer, 120h is a printer, and 120i is an uncrewed aerial vehicle. The terminal may be connected to the radio access network device in a wireless manner. Terminals may be connected to each other in a wired or wireless manner, and access network devices may be connected to each other in a wired or wireless manner.

### (1) Terminal

The terminal may be a terminal that accesses the communication system and that has a wireless receiving/transmitting function, or may be a chip or a chip system that may be disposed in the terminal. The terminal may also be referred to as user equipment (user equipment, UE), a terminal device, a user apparatus, an access terminal, a subscriber unit, a subscriber station, a mobile station (mobile station, MS), a remote station, a remote terminal, a mobile device, a user terminal, a terminal unit, a terminal station, a terminal apparatus, a wireless communication device, a user agent, or a user apparatus.

For example, the terminal in embodiments of this application may be a mobile phone (mobile phone), a personal digital assistant (personal digital assistant, PDA) computer, a laptop computer (laptop computer), a tablet computer (Pad), an uncrewed aerial vehicle, a computer that has a wireless receiving/transmitting function, a machine type communication (machine type communication, MTC) terminal, a virtual reality (virtual reality, VR) terminal, an augmented reality (augmented reality, AR) terminal, an internet of things (internet of things, IoT) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal (for example, a game console, a smart television, a smart speaker, a smart refrigerator, or fitness equipment) in a smart home (smart home), a vehicle-mounted terminal, or an RSU that has a terminal function.

### (2) Access network device

The access network device is a device that is located on a network side of the communication system and that has a wireless receiving/transmitting function, or may be a chip or a chip system that may be disposed in the device.

For example, the access network device in embodiments of this application may be an access point (access point, AP) such as a home gateway, a router, a server, a switch, or a bridge in a Wi-Fi system, a base station, an evolved NodeB (evolved NodeB, eNB), a radio network controller (radio network controller, RNC), a base station controller (base station controller, BSC), a base transceiver station (base transceiver station, BTS), a home base station, a baseband unit (baseband unit, BBU), a radio relay node, a radio backhaul node, a transmission point (transmission and reception point, TRP; or transmission point, TP), or the like, or may be a next-generation base station (next generation NodeB, gNB) in a 5G system, or a network node that forms a gNB, such as a central unit (central unit, CU), a distributed unit (distributed unit, DU), or a roadside unit (road-side unit, RSU) that has a base station function, or may be a satellite or a base station in various forms in the future. In addition, the access network device may be a macro base station (for example, 110a in FIG. 1), or may be a micro base station or an indoor base station (for example, 110b in FIG. 1), or may be a relay node, a donor node, or the like.

### 2. Core network 200

The core network 200 may include one or more core network elements, and may also be referred to as a core network device. The access network device may be connected to the core network element in a wireless or wired manner. The core network element and the access network device may be different physical devices that are independent of each other, or functions of the core network element and logical functions of the access network device may be integrated into a same physical device, or some functions of the core network element and some functions of the access network device may be integrated into one physical device.

A 5G communication system is used as an example. The core network 200 may include a session management function (session management function, SMF) network element, a user plane function (user plane function, UPF) network element, a policy control function (policy control function, PCF) network element, an application function (application function, AF) network element, and the like. For specific descriptions of the foregoing core network elements, refer to related technical specifications of a 3rd generation partnership project (3rd generation partnership project, 3GPP).

### 3. Internet 300

The internet is, for example, a data network (data network, DN) or a packet data network (packet data network, PDN), and is a network located outside an operator network. Application servers corresponding to a plurality of services, for example, an application server corresponding to an XR service, may be deployed in the internet 300. A data frame of the XR service may be transmitted between the application server corresponding to the XR service and the terminal.

Specifically, data transmission may be performed between the terminal and the application server through a user plane data transport channel. The user plane data transport channel may be set up based on a control plane signaling exchange procedure. The control plane signaling exchange procedure is, for example, a protocol data unit (protocol data unit, PDU) session setup procedure. The application server may send a downlink data frame to the terminal through the user plane data transport channel, and a transmission path of the downlink data frame is as follows: the application server → the UPF network element → the access network device → the terminal. Similarly, the terminal may send an uplink data frame to the application server through the user plane data transport channel, and a transmission path of the uplink data frame is as follows: the terminal → the access network device → the UPF network element → the application server.

It may be understood that technical solutions in embodiments of this application may be further applied to another communication system, and a corresponding name may alternatively be replaced with a name of a corresponding function in the another communication system. FIG. 1 is merely a simplified diagram of an example for ease of understanding. The communication system may further include another device that is not drawn in FIG. 1.

The following first explains related technical features in embodiments of this application. It should be noted that these explanations are intended to facilitate understanding of embodiments of this application, but should not be considered as a limitation on the protection scope claimed in this application.

### 1. Data frame

In embodiments of this application, the data frame may also be referred to as a data slice (slice) or a data tile (tile). The data frame may be a video frame, an audio frame, or another possible frame. The following uses an example in which the data frame is a video frame for description.

A video may be composed of consecutive images (pictures, photos, or the like) played consecutively. When 24 images are played quickly per second, human eyes consider that the images are consecutive images (namely, a video). A frame rate indicates a quantity of images played per second. For example, when the frame rate is 24 frames per second (fps), it represents that 24 images are played per second; when the frame rate is 60 fps, it represents that 60 images are played per second; and so on. One video frame may be understood as one image. One video frame may include one or more data packets corresponding to one image, and a data amount of one video frame is a sum of data amounts of the one or more data packets included in the video frame.

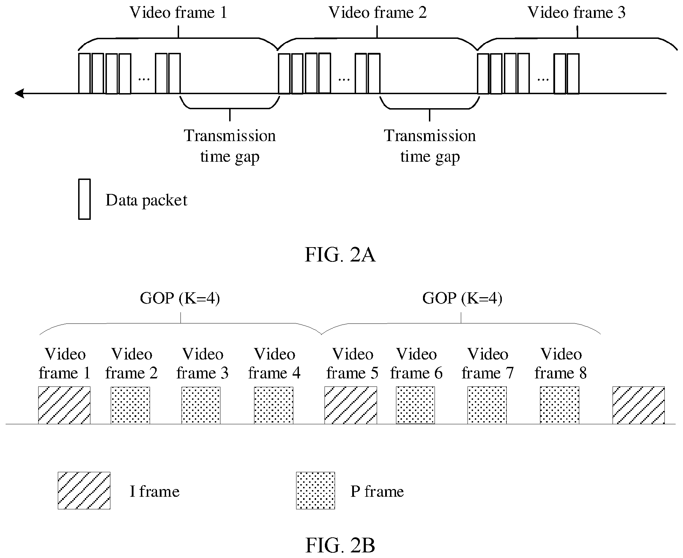

FIG. 2A is a diagram of transmission of a plurality of video frames. As shown in FIG. 2A, a video frame 1, a video frame 2, and a video frame 3 are three consecutive video frames. For example, if the frame rate is 60 fps, a transmission cycle of a video frame is 1000/60=50/3 milliseconds (ms), which is approximately equal to 16.67 ms. The video frame 1 is used as an example. The video frame 1 includes a plurality of data packets, and the plurality of data packets may be distributed in a front segment of a transmission cycle of the video frame 1 (for example, the plurality of data packets may be distributed in first 8 ms of 16.67 ms). In other words, there may be a transmission time gap (gap) between different video frames.

### 2. Encoding of the data frame

To facilitate transmission of the data frame, a transmitting side needs to encode the data frame. Encoding may also be understood as compression. Correspondingly, after receiving the data frame, a receiving side may decode the data frame. The transmitting side may also be referred to as an encoder side, and the receiving side may also be referred to as a decoder side. For example, the encoder side is an application server, and the decoder side is a terminal; or the encoder side is a terminal, and the decoder side is an application server.

### (1) Coding type

There may be a plurality of coding types used to encode the data frame. In an example, the coding type may include intra-frame coding and inter-frame predictive coding. For a data frame, if intra-frame coding is used to encode the data frame, a type of the data frame is an I frame; or if inter-frame predictive coding is used to encode the data frame, a type of the data frame is a P frame. In other words, the I frame is an intra-frame encoded image frame, which is an independent frame with all information and can be decoded independently without reference to another image; and the P frame is a predictive encoded image frame, which needs to refer to a previous frame (the previous frame may be an I frame or a P frame) for encoding, and indicates a difference between the current frame and the previous frame, where during decoding, a previously buffered image needs to be superimposed with a difference defined by the current frame to generate a final image.

### (2) Group of pictures

As shown in FIG. 2B, in a group-of-picture (group of picture, GOP)-based coding scheme, one group of pictures may include K data frames. In FIG. 2B, K=4 is used as an example for illustration. Types of the K data frames included in each group of pictures may be different. For example, in each group of pictures, a type of a 1^{st} data frame is an I frame, and a type of other data frames is a P frame.

### 3. Access stratum

Communication between different devices needs to comply with a corresponding protocol layer structure. For example, a protocol layer structure that needs to be complied with for communication between the terminal and the access network device includes a control plane protocol layer structure and a user plane protocol layer structure. The control plane protocol layer structure may include a radio resource control (radio resource control, RRC) layer, a packet data convergence protocol (packet data convergence protocol, PDCP) layer, a radio link control (radio link control, RLC) layer, a media access control (media access control, MAC) layer, and a physical (physical, PHY) layer. The user plane protocol layer structure may include a PDCP layer, an RLC layer, a MAC layer, and a physical layer. In a possible implementation, a service data adaptation protocol (service data adaptation protocol, SDAP) layer may be further included above the PDCP layer. The RRC layer, the SDAP layer, the PDCP layer, the RLC layer, the MAC layer, and the physical layer may be collectively referred to as an access stratum. For specific descriptions of the foregoing protocol layers, refer to related technical specifications of the 3GPP.

Data transmission between the terminal and the access network device is used as an example. Data transmission needs to pass through the user plane protocol layer, for example, the SDAP layer, the PDCP layer, the RLC layer, the MAC layer, and the physical layer. For example, at least one data radio bearer (data radio bearer, DRB) is set up between the terminal and the access network device for data transmission. Each DRB may correspond to a group of functional entity sets, for example, include one PDCP layer entity, at least one RLC layer entity corresponding to the PDCP layer entity, at least one MAC layer entity corresponding to the at least one RLC layer entity, and at least one physical layer entity corresponding to the at least one MAC layer entity.

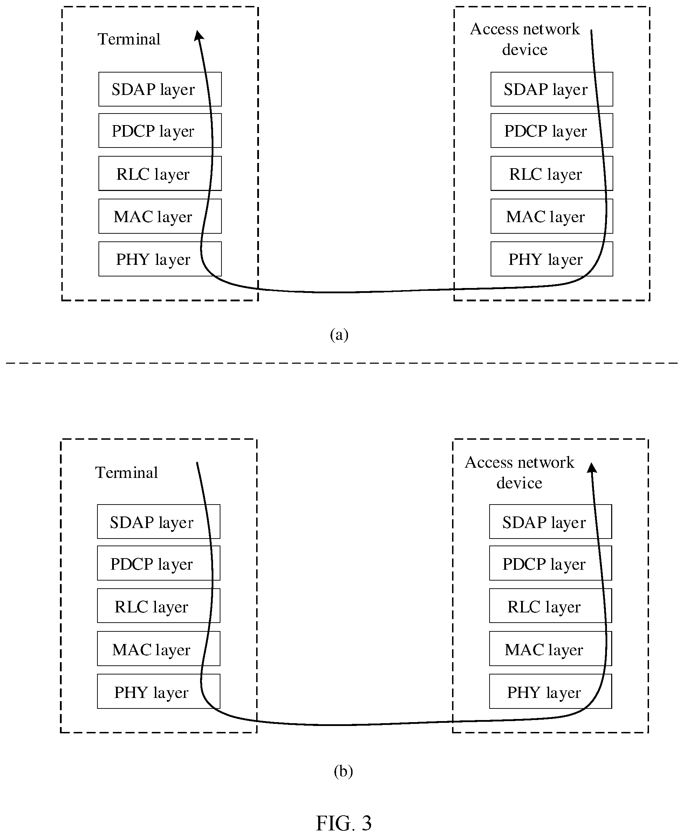

For downlink data transmission, (a) in FIG. 3 is a diagram of downlink data transmission between layers.

From a perspective of the access network device (namely, a transmitting side of data), after obtaining the data, an SDAP layer entity of the access network device may map, based on a quality of service (quality of service, QoS) flow identifier (QoS flow indicator, QFI) of the data, the data to a PDCP layer entity of a corresponding DRB. The PDCP layer entity may transmit the data to at least one RLC layer entity corresponding to the PDCP layer entity, the at least one RLC layer entity transmits the data to a corresponding MAC layer entity, the MAC layer entity generates a transport block, and a corresponding physical layer entity performs wireless transmission, to send the transport block to the terminal.

Downlink data may be correspondingly encapsulated at each layer of the access network device. Data received by a specific layer from an upper layer of the layer is considered as a service data unit (service data unit, SDU) of the layer, and becomes a protocol data unit (protocol data unit, PDU) through layer encapsulation to be transmitted to a next layer. For example, data received by a PDCP layer entity from the SDAP layer may be referred to as a PDCP SDU. After encapsulating the PDCP SDU, the PDCP layer entity obtains a PDCP PDU and sends the PDCP PDU to the RLC layer. The PDCP PDU received by an RLC layer entity from the PDCP layer may be referred to as an RLC SDU. After encapsulating the RLC SDU, the RLC layer entity obtains an RLC PDU and sends the RLC PDU to the MAC layer. Data may be transmitted between different layers through a corresponding channel. For example, data may be transmitted between the RLC layer entity and the MAC layer entity through a logical channel (logical channel, LCH), and data may be transmitted between the MAC layer entity and the physical layer entity through a transport channel (transport channel).

From a perspective of the terminal (namely, a receiving side of data), after receiving the transport block from the access network device, a physical layer of the terminal may sequentially transmit the transport block from the physical layer to an upper layer, and corresponding decapsulation may be performed at each layer. In other words, processing performed at each layer of the terminal may be an inverse process of processing performed at each layer of the access network device.

For uplink data transmission, (b) in FIG. 3 is a diagram of uplink data transmission between layers. In this case, the terminal is a transmitting side of data, and the access network device is a receiving side of data. For processing performed at each layer of the terminal and the access network device, refer to the downlink data transmission above.

In embodiments of this application, for uplink transmission or downlink transmission, an access stratum of the terminal and an access stratum of the access network device may perform differentiated scheduling on different types of data frames. For example, an I frame and a P frame may be transmitted by using different QoS flows or DRBs.

### 4. Application layer and operating system layer

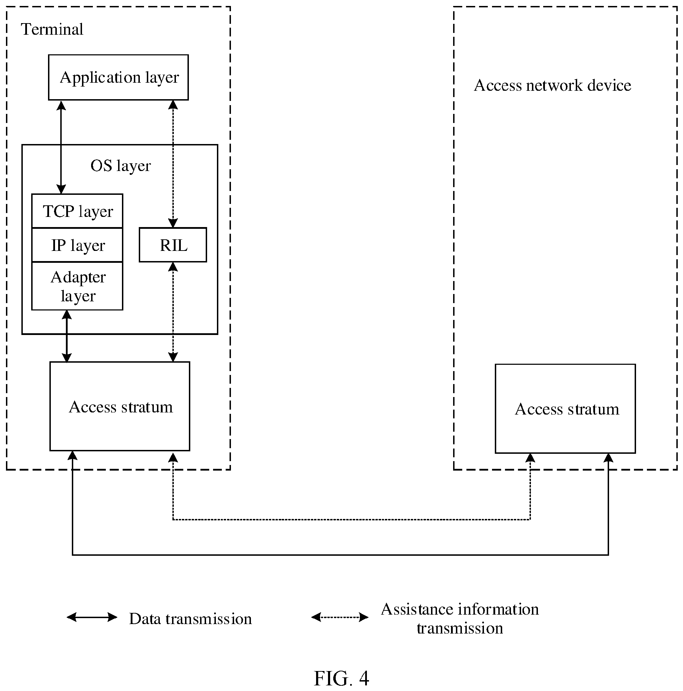

As described above, the terminal may include the access stratum. Further, as shown in FIG. 4, the terminal may include an application layer and an operating system (operating system, OS) layer. The access stratum of the terminal may communicate with the application layer of the terminal through the OS layer of the terminal. That the access stratum of the terminal communicates with the application layer of the terminal through the OS layer of the terminal may include: The access stratum of the terminal and the application layer of the terminal perform data transmission through the OS layer of the terminal, and the access stratum of the terminal and the application layer of the terminal perform assistance information transmission through the OS layer of the terminal. The following describes, with reference to FIG. 4, a specific implementation in which the access stratum of the terminal communicates with the application layer of the terminal through the OS layer of the terminal according to embodiments of this application.

### (1) Data transmission

In a possible implementation, the OS layer of the terminal may include a transmission control protocol (transmission control protocol, TCP) layer and an internet protocol (internet protocol, IP) layer; and optionally, further include an adapter (adapter) layer, as shown in FIG. 4.

For uplink data transmission (that is, the terminal serves as an encoder side), the application layer of the terminal may include an encoder. After encoding a data frame, the encoder may deliver a plurality of data packets of the data frame to the OS layer of the terminal. Then, each layer such as the TCP layer and the IP layer of the OS layer sequentially encapsulates the data packets, and delivers the data packets to the access stratum of the terminal. In this way, the access stratum of the terminal sends the data packets to the access network device.

For downlink data transmission (that is, the terminal serves as a decoder side), the application layer of the terminal may include a decoder. After receiving a plurality of data packets of a data frame from the access network device, the access stratum of the terminal may deliver the plurality of data packets to the OS layer of the terminal. After sequentially decapsulating the plurality of data packets, each layer such as the IP layer and the TCP layer of the OS layer delivers the plurality of data packets to the application layer. In this way, the decoder of the application layer of the terminal decodes the plurality of data packets to obtain the data frame.

### (2) Assistance information transmission

In a possible implementation, the OS layer may include a radio interface layer (radio interface layer, RIL), as shown in FIG. 4. Generally, the RIL may be configured to implement a phone-related function. In embodiments of this application, a function of the RIL is extended, so that the RIL can implement an application (application, APP)-related function. For example, assistance information may be transmitted between the application layer and the access stratum through the RIL. In this way, the access stratum of the terminal and the application layer of the terminal are bridged through the OS layer of the terminal, so that the assistance information can be exchanged between the access stratum of the terminal and the application layer of the terminal, thereby improving a matching degree between a service and a network, and improves user experience.

Specifically, the application layer may communicate with the RIL through an application programming interface (application programming interface, API), and the RIL may communicate with the access stratum by using an attention (attention, AT) command. The API may be a new API designed in embodiments of this application, and the AT command may be a new AT command designed in embodiments of this application. In this way, the new API and the new AT command are designed, so that the assistance information can be exchanged between the access stratum of the terminal and the application layer of the terminal.

In a first example, the access stratum may send the AT command to the RIL, where the AT command includes the assistance information; and correspondingly, after receiving the AT command, the RIL may send the assistance information to the application layer through the API. In this case, the assistance information may include at least one of the following: first indication information, coding recommendation information, a recommended transmission rate, rate negotiation information, and the like. For another example, the application layer may send the assistance information to the RIL through the API; and correspondingly, after receiving the assistance information, the RIL may send the AT command to the access stratum, where the AT command includes the assistance information. In this case, the assistance information may include at least one of the following plurality of items: fourth information, a first threshold, third indication information, and the like.

In a second example, a difference from the first example lies in that the AT command does not include the assistance information, but includes memory location information used to store the assistance information.

For example, in the first example, a format of the AT command may be AT+CECN={Y, Z, A}. In the second example, a format of the AT command may be AT+CECN={ X, Y, Z, T, N, p_1, p_2}. Table 1 shows meanings of parameters.

**Table 1: Parameters and meanings in the AT command**

| Parameter | Meaning |
|---|---|
| CECN | Name of the AT command |
| X | Read command or write command (write or read) |
| Y | Phone-related command or application-related command (telephony or APP) |
| Z | Application identifier (App ID) |
| A | Specific content, such as the assistance information, included in the AT command |
| T | Data type (data type) |
| N | Quantity of bytes (number of bytes), for example, a quantity of bytes to be read by a read command, or a quantity of bytes to be written by a write command |
| p_1 | Start location (beginning point), for example, a start location at which a read command reads a memory, or a start location at which a write command writes a memory, namely, a start location used to store the assistance information |
| p_2 | End location (ending point), for example, an end location at which a read command reads a memory, or an end location at which a write command writes a memory, namely, an end location used to store the assistance information |

For the AT command, it may be understood as follows:
① In embodiments of this application, an example in which a name of the AT command is "CECN" is used. During specific implementation, another possible letter combination may alternatively be used.
② For the second example, the access stratum of the terminal may correspond to specific memory space, and the AT command sent by the access stratum to the RIL may be a read command, that is, the access stratum requests the RIL to read assistance information stored in a specific memory location (where the specific memory location is indicated by p_1 and p_1) in the memory space, so that the RIL may read the assistance information according to the AT command. This is equivalent to that the RIL receives the assistance information. The AT command sent by the RIL to the access stratum may be a write command, that is, the RIL requests the access stratum to write (or store) assistance information to a specific memory location (where the specific memory location is indicated by p_1 and p_1) in memory space, so that the access stratum may write the assistance information according to the AT command. This is equivalent to that the access stratum receives the assistance information.
③ For the "data type" in the AT command, refer to a conventional technology.

The foregoing is described by using an example in which the access stratum and the application layer transmit the assistance information through the RIL. The access stratum and the application layer may alternatively transmit the assistance information in another possible manner. For example, the access stratum and the application layer may transmit the assistance information through a real-time transport protocol (real-time transport protocol, RTP). A specific implementation of transmitting the assistance information between the access stratum and the application layer is not limited in embodiments of this application.

It can be learned from the foregoing descriptions that there may be a dependency relationship (for example, a P frame depends on a previous I or P frame) between different data frames. Therefore, when decoding of a data frame fails, one or more subsequent data frames may not be decoded. For example, if decoding of an I frame in a group of pictures fails, decoding of (K-1) P frames in the group of pictures all fails.

To resolve this problem, a possible idea is as follows: After determining that decoding of a data frame fails, a decoder side feeds back the data frame whose decoding fails to an encoder side, so that the encoder side may adjust a coding scheme of a subsequent data frame based on the data frame whose decoding fails, thereby improving a probability of successfully decoding the subsequent data frame. There may be a plurality of causes for the decoding failure. For example, decoding of the data frame fails because transmission of the data frame fails. However, a transmission path between the encoder side and the decoder side is long. Therefore, a feedback delay of feeding back, from the decoder side to the encoder side, the data frame whose decoding fails may be long. Consequently, the encoder side cannot adjust the coding scheme of the subsequent data frame in a timely manner.

In view of this, an embodiment of this application provides a communication method to feed back a data frame transmission failure to an application layer of an encoder side in a timely manner, so that the application layer of the encoder side adjusts a coding scheme of a subsequent data frame, thereby improving a probability of successfully decoding the subsequent data frame.

### Embodiment 1

In Embodiment 1, a case for uplink transmission (a transmission path of an uplink data frame is as follows: a terminal → an access network device → a UPF network element → an application server) is described. The terminal is an encoder side, and the application server is a decoder side. During uplink transmission, an access stratum of the terminal may determine whether transmission of the uplink data frame fails. If transmission of the uplink data frame fails, an uplink data frame transmission failure may be fed back to an application layer of the terminal.

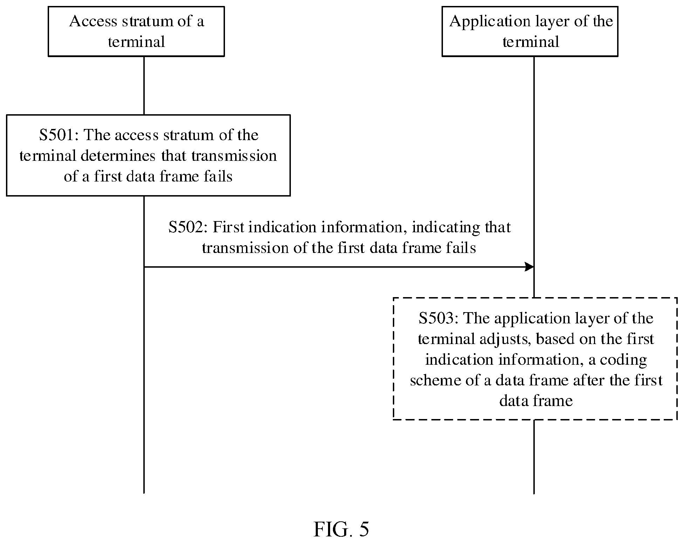

FIG. 5 is a schematic flowchart corresponding to a communication method according to Embodiment 1 of this application. As shown in FIG. 5, the method includes the following steps.

**S501:** The access stratum of the terminal determines that transmission of a first data frame fails, where the first data frame is an uplink data frame.

Specifically, the application layer of the terminal may encode the first data frame, and send the first data frame to the access stratum of the terminal through an OS layer. After receiving the first data frame, the access stratum of the terminal may send the first data frame to an access stratum of the access network device. In a process in which the access stratum of the terminal sends the first data frame to the access stratum of the access network device, transmission of the first data frame may fail due to a plurality of causes. A specific cause is not limited in embodiments of this application. That transmission of a first data frame fails may be understood as follows: The first data frame is not successfully sent, or the first data frame is lost.
**(1)** Specific manner in which the access stratum of the terminal determines that transmission of the first data frame fails

There may be a plurality of manners in which the access stratum of the terminal determines that transmission of the first data frame fails. In a possible implementation, the access stratum of the terminal may count a quantity of data packets whose transmission fails in the first data frame. When the quantity of data packets whose transmission fails in the first data frame is greater than or equal to a first threshold, the access stratum of the terminal may determine that transmission of the first data frame fails.

For example, that the access stratum of the terminal counts a quantity of data packets whose transmission fails in the first data frame may be that the access stratum of the terminal counts a quantity of PDCP SDUs or PDCP PDUs whose transmission fails in the first data frame.

There are a plurality of manners in which the access stratum of the terminal obtains the first threshold. For example, in a data frame transmission process, the application layer of the terminal may send the first threshold to the access stratum of the terminal through an RIL. For another example, in a PDU session setup process (where a PDU session is used to transmit a data frame), a core network element may send the first threshold to the access network device, so that the access stratum of the access network device may send the first threshold to the access stratum of the terminal.

Different types of data frames may correspond to different thresholds. For example, a threshold corresponding to an I frame is a threshold A, and a threshold corresponding to a P frame is a threshold B. In this case, if the first data frame is an I frame, the first threshold is the threshold A; or if the first data frame is a P frame, the first threshold is the threshold B. In embodiments of this application, a value relationship between the threshold A and the threshold B is not limited. In an example, it is considered that a quantity of data packets included in the I frame is greater than a quantity of data packets included in the P frame, and therefore the threshold A may be greater than the threshold B.

In an example, that the access stratum of the terminal determines that transmission of a first data frame fails may indicate the following: A PDCP layer of the terminal determines that transmission of the first data frame fails; or an RLC layer of the terminal determines that transmission of the first data frame fails; or a MAC layer of the terminal determines that transmission of the first data frame fails. In other words, the PDCP layer, the RLC layer, or the MAC layer of the terminal may count a quantity of PDCP SDUs or PDCP PDUs whose transmission fails in the first data frame. When the quantity of PDCP SDUs or PDCP PDUs whose transmission fails in the first data frame is greater than or equal to the first threshold, the PDCP layer, the RLC layer, or the MAC layer of the terminal may determine that transmission of the first data frame fails.

**(2)** Specific manner in which the access stratum of the terminal determines that transmission of a data packet of the first data frame fails

An example in which the first data frame includes a first data packet is used. For example, the first data packet is a first PDCP SDU or a first PDCP PDU. There may be a plurality of manners in which the PDCP layer, the RLC layer, or the MAC layer of the terminal determines that transmission of the first data packet fails. The following describes some possible manners.

For the PDCP layer of the terminal, after a PDCP discard timer (discard timer) corresponding to the first data packet expires, the PDCP layer of the terminal may determine that transmission of the first data packet fails. In this case, the first data packet may be a first PDCP SDU received by the PDCP layer of the terminal from an upper layer. For example, after receiving the first PDCP SDU from the upper layer, the PDCP layer of the terminal may place the first PDCP SDU in a buffer queue, and start a PDCP discard timer corresponding to the first PDCP SDU. After the PDCP discard timer corresponding to the first PDCP SDU expires, the PDCP layer of the terminal may discard the first PDCP SDU in the buffer queue, so that the PDCP layer of the terminal may determine that transmission of the first PDCP SDU fails.

Alternatively, the PDCP layer of the terminal may receive a PDCP status report from the access network device. If the PDCP status report indicates that transmission of the first data packet fails, the PDCP layer of the terminal may determine, based on the PDCP status report, that transmission of the first data packet fails. In this case, the first data packet may be a first PDCP PDU that is sent to a lower layer after being encapsulated at the PDCP layer of the terminal.

For the RLC layer of the terminal, the RLC layer of the terminal may receive an RLC status report from the access network device. If the RLC status report indicates that transmission of a first RLC PDU fails, the RLC layer of the terminal may determine, based on the RLC status report, that transmission of a first data packet corresponding to the first RLC PDU fails. In this case, the first data packet may be a first PDCP PDU or a first PDCP SDU. The first PDCP PDU is used as an example. The first PDCP PDU may correspond to one or more RLC PDUs. When the RLC status report indicates that transmission of one of the one or more RLC PDUs (for example, the first RLC PDU) fails, the RLC layer of the terminal may determine that transmission of the first PDCP PDU corresponding to the first RLC PDU fails.

For the MAC layer of the terminal, after a retransmission timer (retransmission timer) corresponding to a first MAC PDU expires, the MAC layer of the terminal may determine that transmission of the first MAC PDU fails, and transmission of a first data packet corresponding to the first MAC PDU fails. In this case, the first data packet may be a first PDCP PDU or a first PDCP SDU. The first PDCP PDU is used as an example. The first PDCP PDU may correspond to one or more MAC PDUs. For example, during running of the retransmission timer corresponding to the first MAC PDU, the MAC layer of the terminal may retransmit the first MAC PDU. If the first MAC PDU is still not successfully transmitted after the retransmission timer corresponding to the first MAC PDU expires, the MAC layer of the terminal may determine that transmission of the first MAC PDU fails. When transmission of one of the one or more MAC PDUs (for example, the first MAC PDU) corresponding to the first PDCP PDU or the first PDCP SDU fails, the MAC layer of the terminal may determine that transmission of the first PDCP PDU or the first PDCP SDU corresponding to the first MAC PDU fails.

It may be understood that the foregoing descriptions are provided by using an example in which the access stratum of the terminal determines, based on the quantity of data packets whose transmission fails in the first data frame as well as the first threshold, whether transmission of the first data frame fails. The access stratum of the terminal may alternatively determine, based on other possible information, whether transmission of the first data frame fails.

For example, the access stratum of the terminal may determine, based on the quantity of data packets whose transmission fails in the first data frame as well as a second ratio (or referred to as a second threshold), whether transmission of the first data frame fails. Specifically, when a ratio of the quantity of data packets whose transmission fails in the first data frame to a total quantity of data packets in the first data frame is greater than or equal to the second threshold, the access stratum of the terminal may determine that transmission of the first data frame fails. The ratio of the quantity of data packets whose transmission fails in the first data frame to the total quantity of data packets in the first data frame is a proportion of the data packets whose transmission fails in the first data frame.

For another example, the access stratum of the terminal may determine, based on a quantity of data packets that are successfully transmitted in the first data frame as well as a third threshold, whether transmission of the first data frame fails. Specifically, when the quantity of data packets that are successfully transmitted in the first data frame is less than the third threshold, the access stratum of the terminal may determine that transmission of the first data frame fails.

For example, the first threshold, the second threshold, or the third threshold may be preconfigured by a network, or may be separately indicated by each data frame or each group of data frames.

**S502:** The access stratum of the terminal sends first indication information to the application layer of the terminal, where the first indication information indicates that transmission of the first data frame fails; and correspondingly, the application layer of the terminal receives the first indication information.

For example, the access stratum of the terminal may send an AT command to the OS layer (namely, the RIL) of the terminal, where the AT command includes the first indication information. Further, after receiving the AT command, the OS layer may send the first indication information to the application layer through an API between the OS layer and the application layer. For specific implementation, refer to the foregoing descriptions.

For example, the first indication information may include at least one of the following: a transmission failure indication, an identifier of the first data frame, or type information of the first data frame. The transmission failure indication indicates that transmission of a data frame fails, but does not indicate a specific data frame whose transmission fails. The identifier of the first data frame is, for example, a number of the first data frame, and the identifier of the first data frame indicates that the data frame whose transmission fails is the first data frame. The type information of the first data frame indicates that the data frame whose transmission fails is an I frame or a P frame.

For example, in a case 1, the first indication information includes the transmission failure indication and the identifier of the first data frame. In this case, after receiving the first indication information, the application layer of the terminal may determine, based on the transmission failure indication, that transmission of a data frame fails, and further determine, based on the identifier of the first data frame, that the data frame whose transmission fails is the first data frame.

In a case 2, the first indication information includes the identifier of the first data frame, but does not include the transmission failure indication. In this case, after receiving the first indication information, the application layer of the terminal determines, based on the identifier of the first data frame, that transmission of the first data frame fails. In other words, as long as the application layer of the terminal receives an identifier of a data frame, it may be considered that transmission of the data frame fails.

In a case 3, the first indication information includes the transmission failure indication, but does not include the identifier of the first data frame. In this case, after receiving the first indication information, the application layer of the terminal may determine, based on the transmission failure indication, that transmission of a data frame fails, and may further determine that the data frame whose transmission fails is a data frame that is just sent (namely, the first data frame).

A cause is as follows: There is a transmission time interval (as shown in FIG. 2A) between different data frames. Therefore, after the application layer of the terminal sends the first data frame, if transmission of the first data frame fails, the access stratum of the terminal may usually send the first indication information to the application layer of the terminal within the transmission time interval. In this way, if the application layer of the terminal receives the first indication information, it may be determined that the data frame whose transmission fails is the first data frame that is just sent.

It may be understood that, in the case 1, the case 2, and the case 3, after determining that the data frame whose transmission fails is the first data frame, the application layer of the terminal may further determine, according to a coding scheme used by the application layer, a type of the data frame whose transmission fails. Alternatively, in the case 1, the case 2, and the case 3, the first indication information may further include the type information of the first data frame, so that the application layer of the terminal may directly determine, based on the type information, a type of the data frame whose transmission fails.

In a case 4, the first indication information includes the type information of the first data frame, but does not include the transmission failure indication and the identifier of the first data frame. In this case, after receiving the first indication information, the application layer of the terminal may determine that transmission of the first data frame that is just sent fails, and may directly determine, based on the type information of the first data frame, a type of the data frame whose transmission fails.

In addition, if the first indication information includes the identifier of the first data frame, the access stratum of the terminal may first obtain the identifier of the first data frame before sending the first indication information. There may be a plurality of manners in which the access stratum of the terminal obtains the identifier of the first data frame. For example, an **IP** packet header of a data packet of the first data frame includes the identifier of the first data frame, so that the access stratum of the terminal may obtain the identifier of the first data frame from the **IP** packet header of the data packet of the first data frame. For another example, an **IP** packet header of a data packet of the first data frame includes generation time of the first data frame; and the application layer of the terminal may send an identifier of a data frame and generation time of the data frame to the access stratum of the terminal through the OS layer. When the generation time of the data frame is the same as the generation time of the first data frame, the access stratum of the terminal may determine that the identifier of the data frame is the identifier of the first data frame.

If the first indication information includes the type information of the first data frame, the access stratum of the terminal may first obtain the type information of the first data frame before sending the first indication information. There may be a plurality of manners in which the access stratum of the terminal obtains the type information of the first data frame. For example, different types of data frames may be transmitted by using different QoS flows or DRBs. Therefore, the access stratum of the terminal may determine a type of the first data frame based on a DRB that carries the first data frame. For another example, an IP packet header of a data packet of the first data frame includes the type information of the first data frame, so that the access stratum of the terminal may obtain the type information of the first data frame from the IP packet header of the data packet of the first data frame.

Optionally, the method further includes the following step.

**S503:** The application layer of the terminal adjusts, based on the first indication information, a coding scheme of a data frame after the first data frame.

For example, there may be a plurality of manners in which the application layer of the terminal adjusts the coding scheme of the data frame after the first data frame. In a possible implementation, the application layer of the terminal may perform at least one of the following: adjusting a coding type of at least one data frame after the first data frame; adjusting a size of a GOP; or adjusting a coding rate.

The following describes some possible adjustment manners with reference to Example 1 to Example 4.

### (1) Example 1

In Example 1, after determining, based on the first indication information, that transmission of the first data frame fails, the application layer of the terminal may adjust a coding type of a second data frame, where the second data frame is a next data frame of the first data frame. It may be understood that, after the coding type of the second data frame is adjusted, a coding type of a data frame after the second data frame may be determined based on an adjusted coding type of the second data frame. For example, if the adjusted coding type of the second data frame is intra-frame coding, when the GOP is 4, coding types of three data frames after the second data frame are all inter-frame predictive coding.

In a possible implementation, after determining that transmission of the first data frame fails, the application layer of the terminal may use intra-frame coding to encode the second data frame. In other words, when transmission of the first data frame fails, regardless of whether the type of the first data frame is an I frame or a P frame, the application layer of the terminal may use intra-frame coding to encode the second data frame.

In another possible implementation, after determining that transmission of the first data frame fails, the application layer of the terminal determines the coding type of the second data frame based on a location of the first data frame in the GOP. When the first data frame is a 1^{st} data frame or a last data frame in the GOP, the coding type of the second data frame is intra-frame coding; or when the first data frame is a data frame other than a 1^{st} data frame and a last data frame in the GOP, the coding type of the second data frame is intra-frame coding or inter-frame predictive coding. When the coding type of the second data frame is inter-frame predictive coding, because transmission of the first data frame before the second data frame fails, a reference frame for performing inter-frame predictive coding on the second data frame may be a most adjacent data frame that is successfully transmitted and that is before the second data frame.

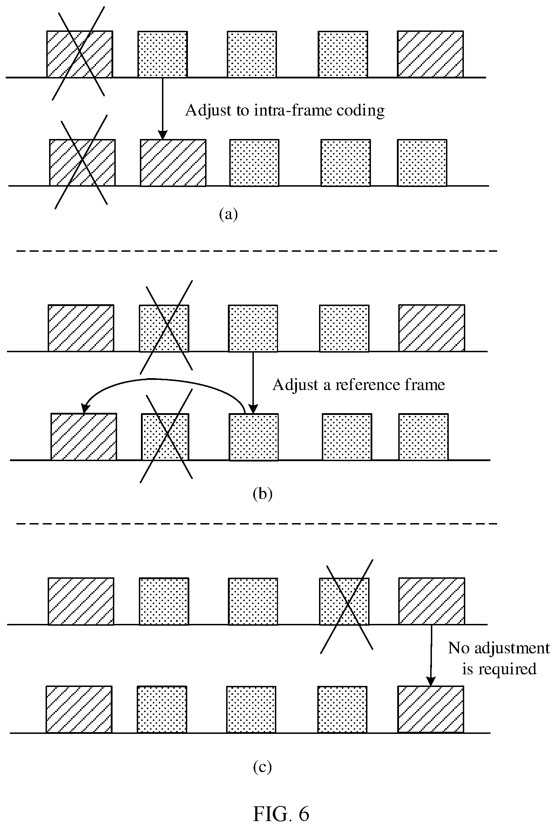

For example, with reference to (a) in FIG. 6, the first data frame is a 1^{st} data frame in a GOP. That is, the type of the first data frame is an I frame, and inter-frame predictive coding is originally to be used to encode the second data frame. After determining that transmission of the first data frame fails, the application layer of the terminal may adjust to use intra-frame coding to encode the second data frame.

With reference to (b) in FIG. 6, the first data frame is a 2^{nd} data frame in a GOP. That is, the type of the first data frame is a P frame, and inter-frame predictive coding is originally to be used to encode the second data frame. After determining that transmission of the first data frame fails, the application layer of the terminal may still use inter-frame predictive coding to encode the second data frame, but adjusts a reference frame for performing inter-frame predictive coding on the second data frame to a 1^{st} data frame in the GOP.

With reference to (c) in FIG. 6, the first data frame is a last data frame in a GOP. That is, the type of the first data frame is a P frame, and intra-frame coding is originally to be used to encode the second data frame. After determining that transmission of the first data frame fails, the application layer of the terminal may still use intra-frame coding to encode the second data frame, that is, not adjust the coding type of the second data frame.

It may be understood that, after the application layer of the terminal receives the first indication information, if it is determined that the second data frame has not been sent to the OS layer, the coding type of the second data frame may be adjusted in the foregoing manner. That the second data frame has not been sent to the OS layer may include: The application layer of the terminal has not encoded the second data frame (in this case, the application layer of the terminal may adjust the coding type of the second data frame in the foregoing manner, and encode the second data frame); or the application layer of the terminal has encoded the second data frame but has not sent the second data frame to the OS layer (in this case, the application layer of the terminal may adjust the coding type of the second data frame in the foregoing manner, and re-encode the second data frame).

If the application layer of the terminal determines that the second data frame has been sent to the OS layer, the coding type of the second data frame may be no longer adjusted in the foregoing manner. Optionally, if the application layer of the terminal determines that a third data frame has not been sent to the OS layer, a coding type of the third data frame may be adjusted, where the third data frame is a next data frame of the second data frame. For a specific implementation of adjusting the coding type of the third data frame, refer to the descriptions of adjusting the coding type of the second data frame. For example, the application layer of the terminal may adjust the coding type of the third data frame based on a location of the second data frame in the GOP.

### (2) Example 2

In Example 2, the application layer of the terminal adjusts the size of the GOP based on the first indication information.

In a possible implementation, before the application layer of the terminal determines that transmission of the first data frame fails, the size of the GOP is 4. After determining that transmission of the first data frame fails, the application layer of the terminal may reduce the size of the GOP, for example, reduce the size of the GOP to 3.

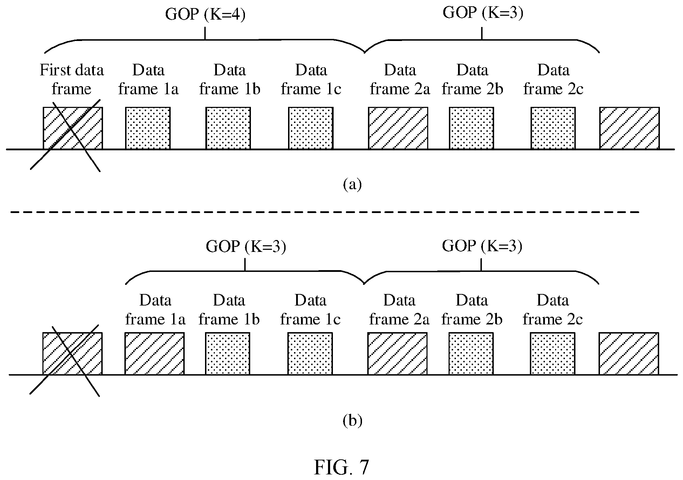

For example, with reference to (a) in FIG. 7, the first data frame is a 1^{st} data frame in a GOP. After determining that transmission of the first data frame fails, the application layer of the terminal may continue to use inter-frame predictive coding to encode remaining three data frames (namely, a data frame 1a, a data frame 1b, and a data frame 1c) in the GOP. The first data frame, the data frame 1a, the data frame 1b, and the data frame 1c constitute the GOP. Then, subsequent data frames are encoded based on a size of a new GOP. For example, based on the size of the new GOP, intra-frame coding is used to encode a data frame 2a, and inter-frame predictive coding is used to encode data frames 2b and 2c. The data frame 2a, the data frame 2b, and the data frame 2c constitute the new GOP, and so on.

For example, to avoid that the size of the GOP is excessively small because the application layer of the terminal adjusts the size of the GOP for a plurality of times, the application layer of the terminal may start or restart a timer each time after the size of the GOP is adjusted. After the timer expires, the application layer of the terminal restores a size of the GOP to the size of the GOP before adjustment. Duration of the timer may be preconfigured.

### (3) Example 3

In Example 3, the application layer of the terminal adjusts both the coding type of the second data frame and the size of the GOP based on the first indication information.

For example, with reference to (b) in FIG. 7, the first data frame is a 1^{st} data frame in a GOP. The application layer of the terminal may encode subsequent data frames based on a size of a new GOP. For example, based on a size of a new GOP, intra-frame coding is used to encode a data frame 1a, and inter-frame predictive coding is used to encode a data frame 1b and a data frame 1c, where the data frame 1a, the data frame 1b, and the data frame 1c constitute the new GOP; and based on a size of a new GOP, intra-frame coding is used to encode a data frame 2a, and inter-frame predictive coding is used to encode a data frame 2b and a data frame 2c, where the data frame 2a, the data frame 2b, and the data frame 2c constitute the new GOP, and so on.

### (4) Example 4

In Example 4, the application layer of the terminal adjusts the coding rate based on the first indication information.

In a possible implementation, the application layer of the terminal may adjust the coding rate by adjusting a frame rate and/or a compression rate of a data frame. For example, after determining that transmission of the first data frame fails, the application layer of the terminal may increase a compression rate of one or more data frames after the first data frame.

It may be understood that Example 1 to Example 4 above are merely some possible examples. In another possible example, the application layer of the terminal may alternatively adjust both the size of the GOP and the coding rate, or the application layer of the terminal may alternatively adjust the coding type of the second data frame, the size of the GOP, and the coding rate. Details are not described again.

According to the method, the access stratum of the terminal may notify the application layer of the terminal after determining that transmission of the first data frame fails. In comparison with a solution in which a decoder side feeds back a data frame whose decoding fails, a feedback delay is short, so that the application layer of the terminal can adjust a coding scheme of a subsequent data frame in a timely manner, thereby improving a probability of successfully decoding the subsequent data frame.

### Embodiment 2

In Embodiment 2, during uplink transmission, an access stratum of an access network device may determine whether transmission of an uplink data frame fails. If transmission of the uplink data frame fails, an uplink data frame transmission failure may be fed back to an access stratum of a terminal, and then the access stratum of the terminal feeds back the uplink data frame transmission failure to an application layer of the terminal.

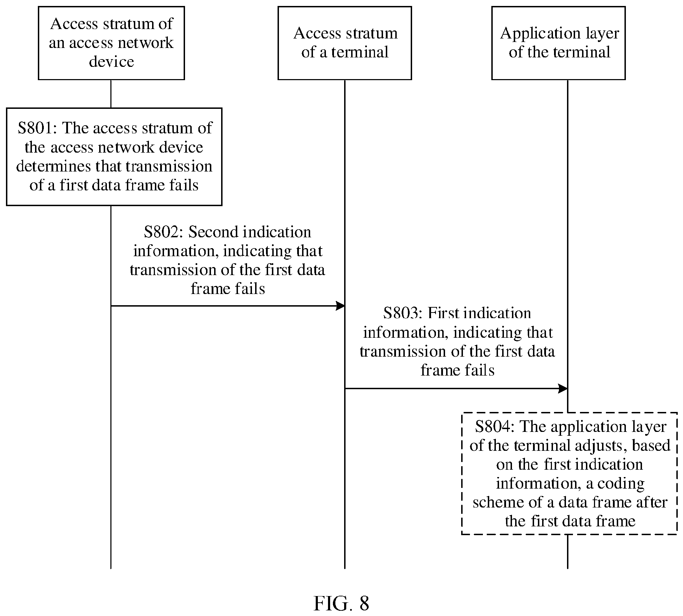

FIG. 8 is a schematic flowchart corresponding to a communication method according to Embodiment 2 of this application. As shown in FIG. 8, the method includes the following steps.

**S801:** The access stratum of the access network device determines that transmission of a first data frame fails.

Herein, there may be a plurality of manners in which the access stratum of the access network device determines that transmission of the first data frame fails. In a possible implementation, the access stratum of the access network device may count a quantity of data packets whose transmission fails in the first data frame. When the quantity of data packets whose transmission fails in the first data frame is greater than or equal to a fourth threshold, the access stratum of the access network device may determine that transmission of the first data frame fails. For example, a PDCP layer or an RLC layer of the access network device may count the quantity of data packets whose transmission fails in the first data frame. When the quantity of data packets whose transmission fails in the first data frame is greater than or equal to the fourth threshold, the PDCP layer or the RLC layer of the access network device may determine that transmission of the first data frame fails.

There are a plurality of manners in which the access stratum of the access network device obtains the fourth threshold. For example, in a data frame transmission process, the application layer of the terminal may send the fourth threshold to the access stratum of the terminal through an RIL, so that the access stratum of the terminal may send the fourth threshold to the access stratum of the access network device. For another example, in a PDU session setup process, a core network element may send the fourth threshold to the access network device. The fourth threshold may be the same as or different from the first threshold in Embodiment 1.

An example in which the first data frame includes a first data packet is used. There may be a plurality of manners in which the PDCP layer or the RLC layer of the access network device determines that transmission of the first data packet fails. The following describes some possible manners.

For the PDCP layer of the access network device, after a PDCP reordering timer (reordering timer) expires, if the PDCP layer of the access network device still does not succeed in receiving the first data packet that needs to be reordered, the PDCP layer of the access network device may determine that transmission of the first data packet fails.

For the RLC layer of the access network device, after an RLC reassembly timer (reassembly timer) expires, if the RLC layer of the access network device still does not succeed in receiving all RLC SDUs corresponding to the first data packet, the RLC layer of the access network device may determine that transmission of the first data packet fails.

It may be understood that the access stratum of the access network device may further determine, in another possible manner, that transmission of the first data frame fails. For example, when a ratio of the quantity of data packets whose transmission fails in the first data frame to a total quantity of data packets in the first data frame is greater than or equal to a fifth threshold, the access stratum of the access network device determines that transmission of the first data frame fails. For a specific implementation, refer to the description of S501 in Embodiment 1.

**S802:** The access stratum of the access network device sends second indication information to the access stratum of the terminal, where the second indication information indicates that transmission of the first data frame fails; and correspondingly, the access stratum of the terminal receives the second indication information from the access network device, and determines, based on the second indication information, that transmission of the first data frame fails.

For example, the second indication information may be carried in an RRC message, signaling of the PDCP layer (for example, a PDCP control PDU), signaling of the RLC layer, signaling of a MAC layer (for example, a MAC control element (control element, CE)), or signaling of a physical layer (for example, downlink control information (downlink control information, DCI)). This is not specifically limited.

For example, content included in the second indication information may be the same as content included in first indication information. That is, the second indication information may include at least one of the following: a transmission failure indication, an identifier of the first data frame, or type information of the first data frame. For a specific implementation in which the access stratum of the access network device obtains the identifier or the type information of the first data frame, refer to the descriptions in Embodiment 1 in which the access stratum of the terminal obtains the identifier or the type information of the first data frame.

**S803:** After determining, based on the second indication information, that transmission of the first data frame fails, the access stratum of the terminal sends the first indication information to the application layer of the terminal, where the first indication information indicates that transmission of the first data frame fails; and correspondingly, the application layer of the terminal receives the first indication information.

Optionally, the method further includes the following step.

**S804:** The application layer of the terminal adjusts, based on the first indication information, a coding scheme of a data frame after the first data frame.

For S803 and S804, refer to S502 and S503 in Embodiment 1.

According to the method, the access stratum of the access network device may notify the access stratum of the terminal after determining that transmission of the first data frame fails, and then the access stratum of the terminal notifies the application layer of the terminal. In comparison with a solution in which a decoder side (namely, an application server) feeds back a data frame whose decoding fails, a feedback delay is short, so that the application layer of the terminal can adjust a coding scheme of a subsequent data frame in a timely manner, thereby improving a probability of successfully decoding the subsequent data frame.

### Embodiment 3

In Embodiment 3, during uplink transmission, an access stratum of an access network device may determine whether transmission of an uplink data frame fails. If transmission of the uplink data frame fails, coding recommendation information may be fed back to an access stratum of a terminal, and then the access stratum of the terminal feeds back the coding recommendation information to an application layer of the terminal.

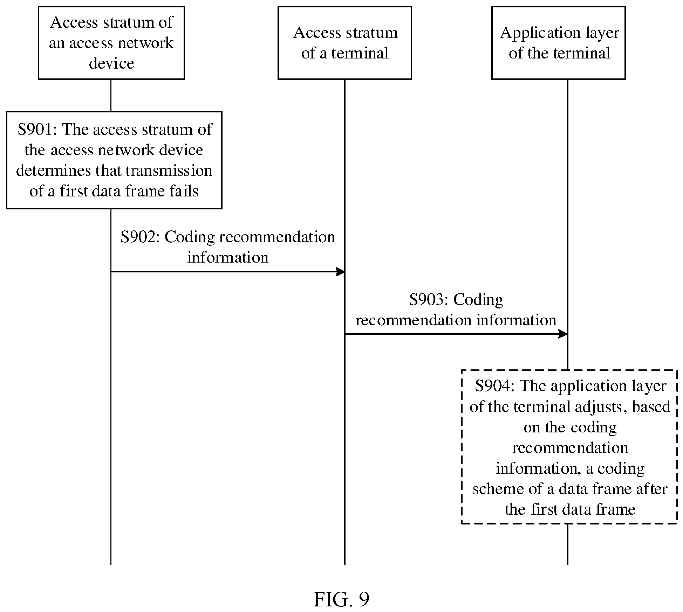

FIG. 9 is a schematic flowchart corresponding to a communication method according to Embodiment 3 of this application. As shown in FIG. 9, the method includes the following steps.

**S901:** The access stratum of the access network device determines that transmission of a first data frame fails.

For example, for a specific implementation of S901, refer to the description in S801.

**S902:** The access stratum of the access network device sends the coding recommendation information to the access stratum of the terminal; and correspondingly, the access stratum of the terminal receives the coding recommendation information.

Herein, after determining that transmission of the first data frame fails, the access stratum of the access network device may determine the coding recommendation information, and send the coding recommendation information to the access stratum of the terminal. For example, the coding recommendation information may be carried in an RRC message, signaling of a PDCP layer, signaling of an RLC layer, signaling of a MAC layer, or signaling of a physical layer. This is not specifically limited. Optionally, the access stratum of the access network device may further send second indication information to the access stratum of the terminal, where the second indication information indicates that transmission of the first data frame fails. For example, the access stratum of the access network device may send the second indication information and the coding recommendation information to the terminal by using a same message or signaling.

It may be understood that, when the access stratum of the access network device sends the coding recommendation information to the access stratum of the terminal but does not send the second indication information, the coding recommendation information may implicitly indicate that transmission of the first data frame fails.

The coding recommendation information is used to adjust a coding scheme of a data frame after the first data frame. For example, the coding recommendation information includes at least one of the following: first information, where the first information indicates a recommended coding type for encoding at least one data frame after the first data frame; second information, where the second information indicates a recommended size of a GOP; or third information, where the third information indicates a recommended coding rate.

There may be a plurality of implementations in which the access stratum of the access network device determines the coding recommendation information. For example, the access stratum of the access network device may obtain fourth information from the terminal, and then determine the coding recommendation information based on the fourth information. The fourth information may include at least one of the following: a coding type of the first data frame, location information of the first data frame in a GOP, a size of the GOP, importance of the first data frame, or a coding rate. The importance of the first data frame may be determined based on a location of the first data frame in the GOP. For example, the importance includes three levels: a level 1, a level 2, and a level 3. Importance of the level 1 is higher than importance of the level 2, and the importance of the level 2 is higher than importance of the level 3. When the first data frame is a 1^{st} data frame in the GOP, the importance of the first data frame is the level 1; when the first data frame is a last data frame in the GOP, the importance of the first data frame is the level 3; or when the first data frame is a data frame other than a 1^{st} data frame and a last data frame in the GOP, the importance of the first data frame is the level 2.

In an example, the application layer of the terminal sends the fourth information to the access stratum of the terminal through an OS layer of the terminal, so that the access stratum of the terminal may send the fourth information to the access network device by using the RRC message, the signaling of the PDCP layer, the signaling of the RLC layer, the signaling of the MAC layer, or the signaling of the physical layer. In another example, the terminal may also send time-sensitive control assistance information (time-sensitive control assistance information, TSCAI) or user assistance information (user assistance information, UAI) to the access network device, where the TSCAI or the UAI includes the fourth information. For a specific implementation in which the terminal sends the TSCAI or the UAI, refer to a conventional technology.

It may be understood that information such as the coding type of the first data frame, the location information of the first data frame in the GOP, and the importance of the first data frame is information related to the first data frame. In other words, when sending each data frame to the access stratum of the access network device, the terminal may further send information related to each data frame to the access stratum of the access network device. For the size of the GOP and the coding rate, when the size of the GOP and the coding rate are updated, the terminal may send an updated size of the GOP and an updated coding rate to the access stratum of the access network device.

The following describes possible implementations in which the access stratum of the access network device determines the first information, the second information, and the third information.
**(1)** An implementation in which the access stratum of the access network device determines the first information is described.

In an example, the at least one data frame may include W data frames. The W data frames are a data frame 1, a data frame 2, ..., and a data frame W. The data frame 1 is a next data frame of the first data frame, the data frame 2 is a next data frame of the data frame 1, and so on. A value of W may be preconfigured, or may be determined by the access stratum of the access network device. This is not specifically limited.

In a possible implementation, after determining that transmission of the first data frame fails, the access stratum of the access network device may determine that recommended coding types for encoding the W data frames are intra-frame coding. In other words, as long as transmission of the first data frame fails, regardless of whether a type of the first data frame is an I frame or a P frame, the access stratum of the access network device may determine that the recommended coding types for encoding the W data frames are intra-frame coding.

In another possible implementation, after determining that transmission of the first data frame fails, the access stratum of the access network device determines, based on the location of the first data frame in the GOP, a recommended coding type of the data frame 1. For a specific implementation, refer to FIG. 6. In addition, the access stratum of the access network device determines, based on a location of the data frame 1 in the GOP, a recommended coding type of the data frame 2, and so on.

There may be a plurality of implementations in which an application layer of the access network device determines the location of the first data frame in the GOP. In a possible implementation, the access stratum of the access network device may determine the location of the first data frame in the GOP based on the fourth information. For example, if the fourth information includes the location information of the first data frame in the GOP, the access stratum of the access network device may directly determine the location of the first data frame in the GOP based on the fourth information. For another example, if the fourth information includes the importance of the first data frame, the access network device may determine the location of the first data frame in the GOP based on the importance of the first data frame. For another example, if the fourth information includes the coding type of the first data frame, the access network device may determine the location of the first data frame in the GOP based on the coding type of the first data frame.

It may be understood that, because the importance of the first data frame, the location of the first data frame in the GOP, and the coding type of the first data frame may be mutually deduced, the "determining, based on the location of the first data frame in the GOP, a recommended coding type of the data frame 1" may alternatively be described as "determining, based on the importance of the first data frame, a recommended coding type of the data frame 1", or "determining, based on the coding type of the first data frame, a recommended coding type of the data frame 1".

**(2)** An implementation in which the access stratum of the access network device determines the second information is described.

For example, the access network device may determine the recommended size of the GOP based on a size of a GOP currently used by the application layer of the terminal. For example, the recommended size of the GOP may be less than the size of the GOP currently used by the application layer of the terminal.

There may be a plurality of manners in which the access stratum of the access network device determines the size of the GOP currently used by the application layer of the terminal. In a possible implementation, the access stratum of the access network device may determine, based on the fourth information (for example, the fourth information includes the size of the GOP), the size of the GOP currently used by the application layer of the terminal.

**(3)** An implementation in which the access stratum of the access network device determines the third information is described.

For example, the access network device may determine a recommended coding rate based on a coding rate currently used by the application layer of the terminal. For example, the recommended coding rate may be less than the coding rate currently used by the application layer of the terminal.

There may be a plurality of manners in which the access stratum of the access network device determines the coding rate currently used by the application layer of the terminal. In a possible implementation, the access stratum of the access network device may determine, based on the fourth information (for example, the fourth information includes the coding rate), the coding rate currently used by the application layer of the terminal.

It may be understood that the foregoing describes some possible implementations in which the access stratum of the access network device determines the coding recommendation information, and embodiments of this application do not limit a specific implementation in which the access stratum of the access network device determines the coding recommendation information. In another possible embodiment, the access stratum of the access network device may alternatively determine the coding recommendation information based on an air interface transmission capability, or determine the coding recommendation information based on an air interface transmission capability and the fourth information.

**S903:** The access stratum of the terminal sends the coding recommendation information to the application layer of the terminal; and correspondingly, the application layer of the terminal receives the coding recommendation information.

For example, the access stratum of the terminal may send an AT command to the OS layer (namely, an RIL) of the terminal, where the AT command includes the coding recommendation information. Further, after receiving the AT command, the OS layer may send the coding recommendation information to the application layer through an API between the OS layer and the application layer. Optionally, the access stratum of the terminal may further send first indication information to the application layer of the terminal, where the first indication information indicates that transmission of the first data frame fails. For example, the access stratum of the terminal may send the first indication information and the coding recommendation information to the OS layer of the terminal by using a same AT command.

Optionally, the method further includes the following step.

**S904:** The application layer of the terminal adjusts, based on the coding recommendation information, the coding scheme of the data frame after the first data frame.

For example, the coding recommendation information includes the first information. The first information indicates recommended coding types for encoding W data frames, and the W data frames are a data frame 1, a data frame 2, ..., and a data frame W. It is assumed that the recommended coding types for encoding the W data frames are all intra-frame coding.

In this case, if the application layer of the terminal determines that the data frame 1 has not been sent, intra-frame coding may be used to encode and send the data frame 1. Optionally, the application layer of the terminal may use inter-frame predictive coding to encode and send the data frame 2. By analogy, the data frame 1 and subsequent K-1 data frames constitute one GOP. In other words, a coding type of the data frame 1 is determined based on the first information, and a coding type of a subsequent data frame of the data frame 1 may be no longer determined based on the first information.

Alternatively, if the application layer of the terminal determines that the data frame 1 has been sent and the data frame 2 has not been sent, intra-frame coding may be used to encode and send the data frame 2. Optionally, the application layer of the terminal may use inter-frame predictive coding to encode and send the data frame 3. By analogy, the data frame 2 and subsequent K-1 data frames constitute one GOP. In other words, a coding type of the data frame 2 is determined based on the first information, and coding types of subsequent data frames of the data frame 1 and the data frame 2 may be no longer determined based on the first information.

For another example, if the coding recommendation information includes the second information, the application layer of the terminal may adjust the size of the GOP to the recommended size of the GOP.

For another example, if the coding recommendation information includes the second information, the application layer of the terminal may adjust the coding rate to the recommended coding rate.

According to the method, the access stratum of the access network device may send the coding recommendation information to the access stratum of the terminal after determining that transmission of the first data frame fails, and then the access stratum of the terminal sends the coding recommendation information to the application layer of the terminal, so that the application layer of the terminal can adjust a coding scheme of a subsequent data frame in a timely manner based on the coding recommendation information, thereby improving a probability of successfully decoding the subsequent data frame.

### Embodiment 4

In Embodiment 4, a case for downlink transmission (a transmission path of a downlink data frame is as follows: an application server → a UPF network element → an access network device → a terminal) is described. The application server is an encoder side, and the terminal is a decoder side. During downlink transmission, an access stratum of the access network device may determine whether transmission of the downlink data frame fails. If transmission of the downlink data frame fails, a downlink data frame transmission failure may be fed back to an access stratum of the terminal, the access stratum of the terminal feeds back the downlink data frame transmission failure to an application layer of the terminal, and then the application layer of the terminal feeds back the downlink data frame transmission failure to the application server.

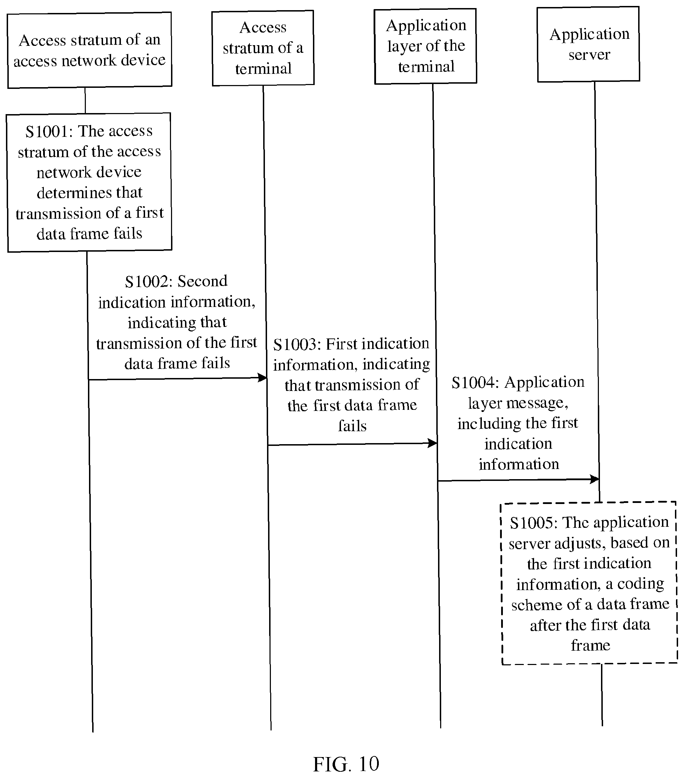

FIG. 10 is a schematic flowchart corresponding to a communication method according to Embodiment 4 of this application. As shown in FIG. 10, the method includes the following steps.

**S1001:** The access stratum of the access network device determines that transmission of a first data frame fails.

Herein, for an implementation in which the access stratum of the access network device determines that transmission of the first data frame fails, refer to the description of S801 in Embodiment 2.

**S1002:** The access stratum of the access network device sends second indication information to the terminal, where the second indication information indicates that transmission of the first data frame fails; and correspondingly, the access stratum of the terminal receives the second indication information from the access network device, and determines, based on the second indication information, that transmission of the first data frame fails.

Herein, for an implementation in which the access stratum of the access network device sends the second indication information to the terminal, refer to the description of S802 in Embodiment 2.

**S1003:** The access stratum of the terminal sends first indication information to the application layer of the terminal, where the first indication information indicates that transmission of the first data frame fails; and correspondingly, the application layer of the terminal receives the first indication information.

Herein, for an implementation in which the access stratum of the terminal sends the first indication information to the application layer of the terminal, refer to the description of S502 in Embodiment 1.

**S1004:** The application layer of the terminal sends an application layer message to the application server, where the application layer message includes the first indication information; and correspondingly, the application server receives the first indication information.

As described in Embodiment 1, the first indication information includes at least one of the transmission failure indication, the identifier of the first data frame, and the type information of the first data frame. Herein, the application layer message includes the first indication information. That is, the application layer message includes at least one of the transmission failure indication, the identifier of the first data frame, and the type information of the first data frame.

For example, the application layer of the terminal may send the application layer message to the application server through a TCP connection.

Optionally, the method further includes the following step.

**S1005:** The application server adjusts, based on the first indication information, a coding scheme of a data frame after the first data frame.

Herein, for an implementation in which the application server adjusts the coding scheme, refer to the description of S503 in Embodiment 1.

According to the method, the access stratum of the access network device may notify the access stratum of the terminal after determining that transmission of the first data frame fails, the access stratum of the terminal notifies the application layer of the terminal, and then the application layer of the terminal notifies the application server, so that the application server can adjust a coding scheme of a subsequent data frame in a timely manner, thereby improving a probability of successfully decoding the subsequent data frame.

In addition, in another possible embodiment, after determining that transmission of the first data frame fails, the access network device may notify, through a core network element (for example, an AMF network element, an SMF network element, a UPF network element, or an AF network element), the application server that transmission of the first data frame fails. However, in this manner, related content of a core network in an existing protocol needs to be modified. According to the solution in Embodiment 4 above, the terminal may notify, by using the application layer message, the application server that transmission of the first data frame fails (the core network element does not parse the application layer message), so that modification to the related content of the core network in the existing protocol can be avoided, and implementation is convenient.

### Embodiment 5

In Embodiment 4, during downlink transmission, an access stratum of an access network device may determine whether transmission of a downlink data frame fails. If transmission of the downlink data frame fails, coding recommendation information may be fed back to an access stratum of a terminal, the access stratum of the terminal feeds back the coding recommendation information to an application layer of the terminal, and then the application layer of the terminal feeds back the coding recommendation information to an application server.

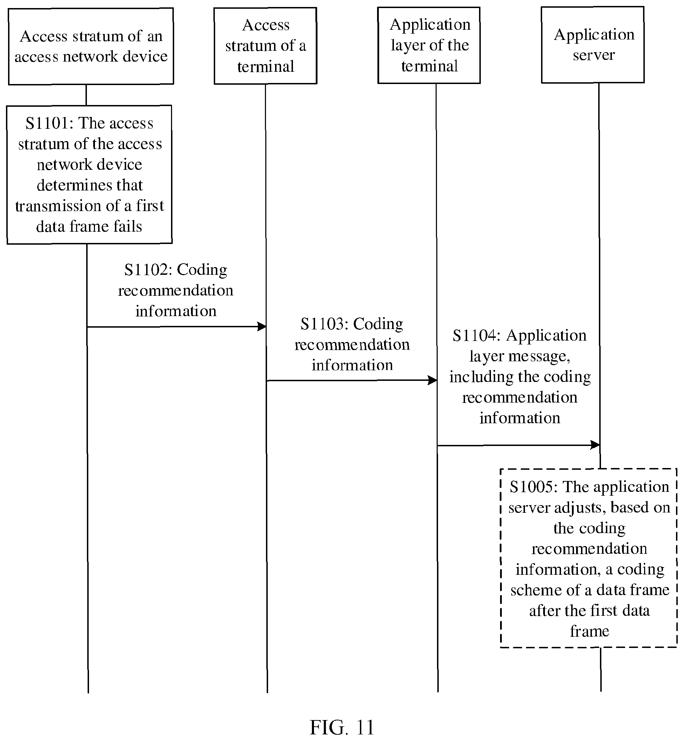

FIG. 11 is a schematic flowchart corresponding to a communication method according to Embodiment 5 of this application. As shown in FIG. 11, the method includes the following steps.

**S1101:** The access stratum of the access network device determines that transmission of a first data frame fails.

Herein, for an implementation in which the access stratum of the access network device determines that transmission of the first data frame fails, refer to the description of S801 in Embodiment 2.

**S1102:** The access stratum of the access network device sends the coding recommendation information to the terminal; and correspondingly, the access stratum of the terminal receives the coding recommendation information.

Herein, for an implementation in which the access stratum of the access network device sends the coding recommendation information to the terminal, refer to the description of S902 in Embodiment 3.

For example, for fourth information, a difference between downlink transmission and uplink transmission lies in that, during uplink transmission, the terminal may determine the fourth information, and send the fourth information to the access network device. During downlink transmission, the access network device may obtain the fourth information from the terminal. For example, the application server may send the fourth information to the terminal, and then the terminal sends the fourth information to the access network device. Alternatively, the access network device may obtain the fourth information from a core network element. For example, the application server may send the fourth information to an AF network element, the AF network element sends the fourth information to an SMF network element, and then the SMF network element sends the fourth information to the access network device.

**S1103:** The access stratum of the terminal sends the coding recommendation information to the application layer of the terminal; and correspondingly, the application layer of the terminal receives the coding recommendation information.

Herein, for an implementation in which the access stratum of the terminal sends the coding recommendation information to the application layer of the terminal, refer to the description of S903 in Embodiment 3.

**S1104:** The application layer of the terminal sends an application layer message to the application server, where the application layer message includes the coding recommendation information.

Optionally, the method further includes the following step.

**S1105:** The application server adjusts, based on the coding recommendation information, a coding scheme of a data frame after the first data frame.

Herein, for an implementation in which the application server adjusts the coding scheme, refer to the description of S904 in Embodiment 3.

According to the method, the access stratum of the access network device may send the coding recommendation information to the terminal after determining that transmission of the first data frame fails, and then the application layer of the terminal sends the coding recommendation information to the application server, so that the application server can adjust a coding scheme of a subsequent data frame in a timely manner based on the coding recommendation information, thereby improving a probability of successfully decoding the subsequent data frame.

### Embodiment 6

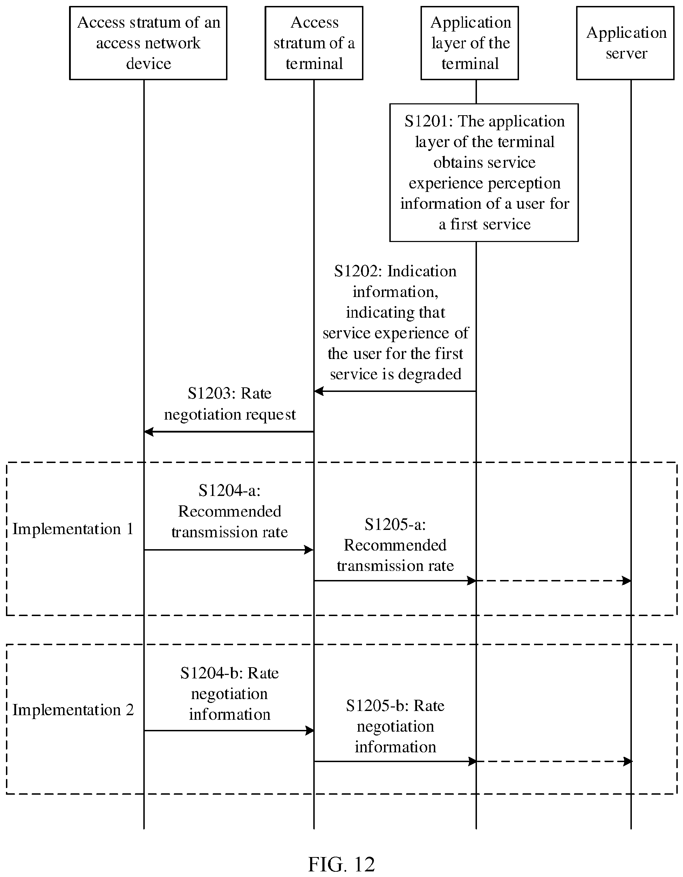

As described above, an access stratum of a terminal and an application layer of the terminal may transmit assistance information through an RIL. There may be a plurality of application scenarios of this solution. For example, in a possible application scenario, the application layer of the terminal may obtain service experience perception information of a user, and then trigger, based on the service experience perception information, the access stratum of the terminal to negotiate a transmission rate with an access network device, to improve user experience. The following gives a detailed description with reference to FIG. 12.

FIG. 12 is a schematic flowchart corresponding to a communication method according to Embodiment 6 of this application. As shown in FIG. 12, the method includes the following steps.

S1201: The application layer of the terminal obtains service experience perception information of the user for a first service.

For example, service experience may be classified into a plurality of different levels, for example, four levels: excellent, good, average, and poor. Correspondingly, the service experience perception information indicates a level of an excellent, good, average, or poor service experience of the user for the first service.

For example, the application layer of the terminal may request, in a manner such as a pop-up window of a display interface, the user to select a level of a current service experience, namely, excellent, good, average, or poor, so that the service experience perception information of the user for the first service may be obtained based on the level selected by the user.

S1202: The application layer of the terminal sends third indication information to the access stratum of the terminal based on the service experience perception information, where the third indication information indicates that service experience of the user for the first service is degraded.

For example, when determining that a level of the service experience for the first service is low (for example, the level is average or poor), the application layer of the terminal sends the third indication information to an OS layer through an API, where the third indication information indicates that the service experience of the user for the first service is degraded. Further, after receiving the third indication information, the OS layer may send an AT command to the access stratum of the terminal, where the AT command includes the third indication information.

S1203: The access stratum of the terminal sends a transmission rate negotiation request to an access stratum of the access network device based on the third indication information; and correspondingly, the access stratum of the access network device receives the rate negotiation request.

Further, the method may further include S1204-a and S1205-a (namely, an implementation 1), or include S1204-b and S1205-b (namely, an implementation 2).

S1204-a: The access stratum of the access network device determines a recommended transmission rate of the first service, and sends the recommended transmission rate of the first service to the access stratum of the terminal; and correspondingly, the access stratum of the terminal receives the recommended transmission rate of the first service.

For example, the access stratum of the access network device may determine the recommended transmission rate of the first service based on at least one of (1), (2), and (3) as follows: (1) a waiting delay status (for example, a queue length of a PDCP layer, a waiting delay, and a remaining delay) of the first service; (2) channel quality of an air interface; or (3) usage of a channel resource. For example, if the queue length of the PDCP layer is long, the channel quality of the air interface is poor, or there are few available resources of the channel resource for the first service, the determined recommended transmission rate of the first service may be less than a current transmission rate.

S1205-a: The access stratum of the terminal sends the recommended transmission rate of the first service to the application layer of the terminal.

For example, the access stratum of the terminal sends an AT command to the OS layer, where the AT command includes the recommended transmission rate of the first service. Further, after receiving the AT command, the OS layer sends the recommended transmission rate of the first service to the application layer of the terminal through an API.

In this way, for uplink transmission, the application layer of the terminal receives the recommended transmission rate of the first service, and may adjust a transmission rate of the first service based on the recommended transmission rate of the first service, thereby improving user experience.

For downlink transmission, the application layer of the terminal may send an application layer message to an application server, where the application layer message includes the recommended transmission rate of the first service. Correspondingly, after receiving the recommended transmission rate of the first service, the application server may adjust a transmission rate of the first service based on the recommended transmission rate of the first service, thereby improving user experience. The application layer message sent by the application layer of the terminal to the application server may be transmitted to the application server through the access network device and a core network element, and the access network device and the core network element do not parse the application layer message.

S1204-b: The access stratum of the access network device sends rate negotiation information to the access stratum of the terminal; and correspondingly, the access stratum of the terminal receives the rate negotiation information.

For example, the rate negotiation information may include at least one of the following: (1) a waiting delay status (for example, a queue length of a PDCP layer, a waiting delay, and a remaining delay) of the first service; (2) channel quality of an air interface; or (3) usage of a channel resource.

S1205-b: The access stratum of the terminal sends the rate negotiation information to the application layer of the terminal.

For example, the access stratum of the terminal sends an AT command to the OS layer, where the AT command includes the rate negotiation information. Further, after receiving the AT command, the OS layer sends the rate negotiation information to the application layer of the terminal through an API.

In this way, for uplink transmission, after receiving the rate negotiation information, the application layer of the terminal may adjust a transmission rate of the first service based on the rate negotiation information, thereby improving user experience. For example, if the queue length of the PDCP layer is long, the channel quality of the air interface is poor, or there are few available resources of the channel resource for the first service, the application layer of the terminal may reduce the transmission rate of the first service.

For downlink transmission, the application layer of the terminal may send an application layer message to an application server, where the application layer message includes the rate negotiation information. Correspondingly, after receiving the rate negotiation information, the application server may adjust a transmission rate of the first service based on the rate negotiation information, thereby improving user experience.

In addition, for information transmitted between the access stratum of the terminal and the access stratum of the access network device (for example, the access stratum of the terminal sends the transmission rate negotiation request to the access stratum of the access network device, the access stratum of the access network device sends the recommended transmission rate of the first service to the access stratum of the terminal, and the access stratum of the access network device sends the rate negotiation information to the access stratum of the terminal), the information may be carried in an RRC message, signaling of the PDCP layer, signaling of an RLC layer, signaling of a MAC layer, or signaling of a physical layer. For details, refer to the foregoing descriptions.

For Embodiment 1 to Embodiment 6 above, it may be understood as follows:
(1) The foregoing focuses on differences between different embodiments in Embodiment 1 to Embodiment 6, and Embodiment 1 to Embodiment 6 may refer to each other except for other content of the differences. In addition, in a same embodiment, different implementations or different examples may also refer to each other.
(2) Step numbers in the flowcharts described in Embodiment 1 to Embodiment 6 are merely examples of executing procedures and do not constitute a limitation on an execution sequence of the steps. In embodiments of this application, there is no strict execution sequence between steps that have no time sequence dependency relationship with each other. Not all the steps shown in the flowcharts are mandatory steps. Some steps may be deleted from the flowcharts according to an actual requirement, or another possible step may be added to the flowcharts according to an actual requirement.
(3) In embodiments of this application, that "A sends information a to B, and B sends the information a to C after receiving the information a" may be as follows: After receiving and parsing the information a, B does not process the information a, but directly sends the information a to C; or after receiving and parsing the information a, B processes the information a (for example, adjusts a format of the information a), and sends the processed information a to C. The information a before processing and the information a after processing have a same function; and optionally, include a same specific content.

The foregoing mainly describes the solutions provided in embodiments of this application from a perspective of interaction between communication apparatuses. It may be understood that, to implement the foregoing functions, the access network device and the terminal may include corresponding hardware structures and/or software modules for implementing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, division into functional units may be performed on the access network device and the terminal based on the foregoing method examples. For example, each functional unit may be obtained through division based on each corresponding function, or two or more functions may be integrated into one unit. The integrated unit may be implemented in a form of hardware, or may be implemented in a form of a software functional unit.

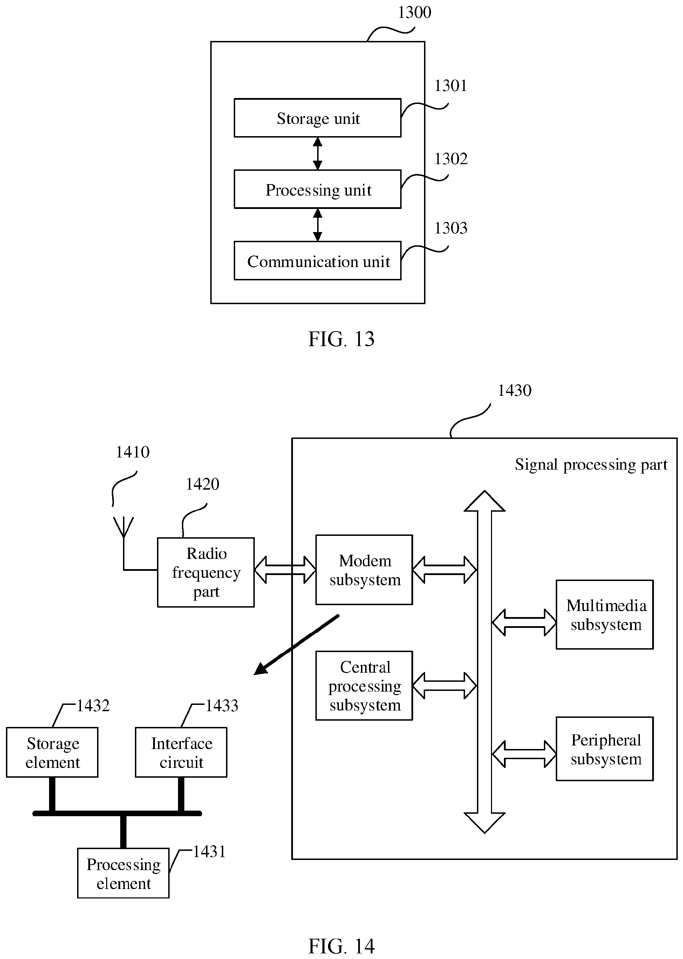

FIG. 13 is a possible example block diagram of an apparatus according to an embodiment of this application. As shown in FIG. 13, the apparatus 1300 may include a processing unit 1302 and a communication unit 1303. The processing unit 1302 is configured to control and manage an action of the apparatus 1300. The communication unit 1303 is configured to support communication between the apparatus 1300 and another device. Optionally, the communication unit 1303 is also referred to as a transceiver unit, and may include a receive unit and/or a transmit unit, respectively configured to perform a receiving operation and a transmitting operation. The apparatus 1300 may further include a storage unit 1301, configured to store program code and/or data of the apparatus 1300.

The apparatus 1300 may be the terminal in the foregoing embodiments, or may be a component (for example, a circuit or a chip) disposed in the terminal. The processing unit 1302 may support the apparatus 1300 in performing actions of the terminal in the foregoing method examples. Alternatively, the processing unit 1302 mainly performs internal actions of the terminal in the method examples, and the communication unit 1303 may support communication between the apparatus 1300 and another device.

For example, in an embodiment, the processing unit 1302 is configured to: determine, at an access stratum of a terminal, that transmission of a first data frame fails, and control the access stratum of the terminal to send first indication information to an application layer of the terminal, where the first indication information indicates that transmission of the first data frame fails.

In a possible design, the processing unit 1302 is specifically configured to: control the access stratum of the terminal to send an attention AT command to an operating system OS layer of the terminal, where the AT command includes the first indication information; and control the OS layer of the terminal to send the first indication information to the application layer.

In a possible design, the processing unit 1302 is specifically configured to control the OS layer of the terminal to send the first indication information to the application layer by invoking an application programming interface API.

In a possible design, the first indication information includes at least one of the following: a transmission failure indication; an identifier of the first data frame; or type information of the first data frame.

In a possible design, the first data frame is an uplink data frame; and the processing unit 1302 is specifically configured to: when a quantity of data packets whose transmission fails in the first data frame is greater than or equal to a threshold, determine, at the access stratum of the terminal, that transmission of the first data frame fails.

In a possible design, the first data frame is an uplink data frame or a downlink data frame; the communication unit 1303 is configured to receive second indication information from an access network device, where the second indication information indicates that transmission of the first data frame fails; and the processing unit 1302 is specifically configured to determine, at the access stratum of the terminal based on the second indication information, that transmission of the first data frame fails.

In a possible design, when the first data frame is a downlink data frame, the communication unit 1303 is configured to send an application layer message to an application server, where the application layer message includes the first indication information.

In a possible design, the communication unit 1303 is configured to receive coding recommendation information from the access network device, where the coding recommendation information is used to adjust a coding scheme of a data frame after the first data frame; and the processing unit 1302 is further configured to control the access stratum of the terminal to send the coding recommendation information to the application layer of the terminal.

In a possible design, the coding recommendation information includes at least one of the following: first information, where the first information indicates a recommended coding type for encoding at least one data frame after the first data frame; second information, where the second information indicates a recommended size of a group of pictures GOP; or third information, where the third information indicates a recommended coding rate.

In a possible design, the communication unit 1303 is configured to send fourth information to the access network device, where the fourth information is used to determine the coding recommendation information.

In a possible design, the fourth information includes at least one of the following: a coding type of the first data frame; location information of the first data frame in a GOP; a size of the GOP; importance of the first data frame; or a coding rate used by the application layer of the terminal.

In a possible design, when the first data frame is a downlink data frame, the communication unit 1303 is configured to send the coding recommendation information to the application server.

The apparatus 1300 may be the access network device in the foregoing embodiments, or may be a component (for example, a circuit or a chip) disposed in the access network device. The processing unit 1302 may support the apparatus 1300 in performing actions of the access network device in the foregoing method examples. Alternatively, the processing unit 1302 mainly performs internal actions of the access network device in the method examples, and the communication unit 1303 may support communication between the apparatus 1300 and another device.

In an embodiment, the processing unit 1302 is configured to determine, at an access stratum of an access network device, that transmission of a first data frame fails, where the first data frame is an uplink data frame or a downlink data frame; and the communication unit 1303 is configured to send second indication information to a terminal, where the second indication information indicates that transmission of the first data frame fails.

In a possible design, the processing unit 1302 is specifically configured to: when a quantity of data packets whose transmission fails in the first data frame is greater than or equal to a threshold, determine, at the access stratum of the access network device, that transmission of the first data frame fails.

In a possible design, the communication unit 1303 is further configured to obtain the threshold from the terminal or a core network element.

In a possible design, the second indication information includes at least one of the following: a transmission failure indication; an identifier of the first data frame; or a type of the first data frame.

In a possible design, the communication unit 1303 is further configured to send coding recommendation information to the terminal, where the coding recommendation information is used to adjust a coding scheme of a data frame after the first data frame.

In a possible design, the coding recommendation information includes at least one of the following: first information, where the first information indicates a recommended coding type for encoding at least one data frame after the first data frame; second information, where the second information indicates a recommended size of a GOP; or third information, where the third information indicates a recommended coding rate.

In a possible design, the communication unit 1303 is further configured to receive fourth information from the terminal or the core network element, where the fourth information is used to determine the coding recommendation information.

In a possible design, the fourth information includes at least one of the following: a coding type of the first data frame; location information of the first data frame in a GOP; a size of the GOP; importance of the first data frame; or a coding rate used by an application layer of the terminal.

It should be understood that division into the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated, or may be implemented independently. The processing element herein may also be referred to as a processor, and may be an integrated circuit that has a signal processing capability. In an implementation process, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more microprocessors (digital signal processor, DSP), one or more field programmable gate arrays (field programmable gate array, FPGA), or a combination of at least two of these forms of integrated circuits. For another example, when the units in the apparatus may be implemented in a form in which a processing element schedules a program, the processing element may be a processor, for example, a general-purpose central processing unit (central processing unit, CPU) or another processor that can invoke the program. For still another example, the units may be integrated and implemented in a form of a system-on-α-chip (system-on-a-chip, SOC).

The foregoing unit for receiving is an interface circuit of the apparatus, and is configured to receive a signal from another apparatus. For example, when the apparatus is implemented in a manner of a chip, the receive unit is an interface circuit that is of the chip and that is configured to receive a signal from another chip or apparatus. The foregoing unit for transmitting is an interface circuit of the apparatus, and is configured to transmit a signal to another apparatus. For example, when the apparatus is implemented in a manner of a chip, the transmit unit is an interface circuit that is of the chip and that is configured to transmit a signal to another chip or apparatus.

FIG. 14 is a diagram of a structure of a terminal according to an embodiment of this application, to implement operations of the terminal in the foregoing embodiments. As shown in FIG. 14, the terminal includes an antenna 1410, a radio frequency part 1420, and a signal processing part 1430. The antenna 1410 is connected to the radio frequency part 1420. In a downlink direction, the radio frequency part 1420 receives, through the antenna 1410, information sent by a network device, and sends the information sent by the network device to the signal processing part 1430 for processing. In an uplink direction, the signal processing part 1430 processes information about the terminal, and sends processed information to the radio frequency part 1420; and the radio frequency part 1420 processes the information about the terminal, and then sends processed information to the network device through the antenna 1410.

The signal processing part 1430 may include a modem subsystem, configured to process data at each communication protocol layer. The signal processing part 1430 may further include a central processing subsystem, configured to implement processing at an operating system layer and an application layer of the terminal. In addition, the signal processing part 1430 may further include another subsystem, for example, a multimedia subsystem or a peripheral subsystem. The multimedia subsystem is configured to control a camera, a screen display, or the like of the terminal, and the peripheral subsystem is configured to implement a connection to another device. The modem subsystem may be a separately disposed chip.

The modem subsystem may include one or more processing elements 1431, for example, include a main control CPU and another integrated circuit. **In** addition, the modem subsystem may further include a storage element 1432 and an interface circuit 1433. The storage element 1432 is configured to store data and a program. However, the program used to perform the method performed by the terminal in the foregoing methods may not be stored in the storage element 1432, but is stored in a memory outside the modem subsystem, and is loaded and used by the modem subsystem when to be used. The interface circuit 1433 is configured to communicate with another subsystem.

The modem subsystem may be implemented by using a chip. The chip includes at least one processing element and an interface circuit. The processing element is configured to perform the steps of any method performed by the terminal. The interface circuit is configured to communicate with another apparatus. In an implementation, units in the terminal for implementing the steps in the foregoing methods may be implemented in a form in which a processing element schedules a program. For example, the apparatus used in the terminal includes a processing element and a storage element. The processing element invokes a program stored in the storage element, to perform the method performed by the terminal in the foregoing method embodiments. The storage element may be a storage element located on a same chip as the processing element, namely, an on-chip storage element.

In another implementation, a program used to perform the method performed by the terminal in the foregoing methods may be in a storage element located on a different chip from the processing element, namely, an off-chip storage element. In this case, the processing element invokes or loads the program from the off-chip storage element to the on-chip storage element, to invoke and perform the method performed by the terminal in the foregoing method embodiments.

In still another implementation, units in the terminal for implementing the steps in the foregoing methods may be configured as one or more processing elements. These processing elements are disposed on the modem subsystem. The processing element herein may be an integrated circuit, for example, one or more ASICs, one or more DSPs, one or more FPGAs, or a combination of these types of integrated circuits. These integrated circuits may be integrated together to constitute a chip.

The units in the terminal for implementing the steps in the foregoing methods may be integrated together and implemented in a form of a SOC, and the SOC chip is configured to implement the foregoing methods. At least one processing element and a storage element may be integrated into the chip, and the processing element invokes a program stored in the storage element to implement the foregoing method performed by the terminal. Alternatively, at least one integrated circuit may be integrated into the chip, to implement the foregoing method performed by the terminal. Alternatively, with reference to the foregoing implementations, functions of some units may be implemented in a form in which the processing element invokes a program, and functions of some units may be implemented by the integrated circuit.

It can be learned that the foregoing apparatus used in the terminal may include at least one processing element and an interface circuit. The at least one processing element is configured to perform any method performed by the terminal in the foregoing method embodiments. The processing element may perform some or all steps performed by the terminal in a first manner, that is, by invoking a program stored in the storage element; or may perform some or all steps performed by the terminal in a second manner, that is, by combining instructions and a hardware integrated logic circuit in the processor element. Certainly, some or all steps performed by the terminal may alternatively be performed by combining the first manner and the second manner.

The processing element herein is the same as that described above, and may be implemented by using a processor. A function of the processing element may be the same as a function of the processing unit described in FIG. 13. For example, the processing element may be a general-purpose processor, for example, a CPU, or may be one or more integrated circuits configured to implement the foregoing method, for example, one or more ASICs, one or more microprocessors DSPs, or one or more FPGAs, or a combination of at least two of the integrated circuit forms. The storage element may be implemented by using a memory. A function of the storage element may be the same as a function of the storage unit described in FIG. 13. The storage element may be a memory, or may be a general name of a plurality of memories.

The terminal shown in FIG. 14 can implement processes related to the terminal in the foregoing method embodiments. Operations and/or functions of modules in the terminal shown in FIG. 14 are respectively intended to implement corresponding procedures in the foregoing method embodiments. For details, refer to the descriptions in the foregoing method embodiments. To avoid repetition, detailed descriptions are properly omitted herein.

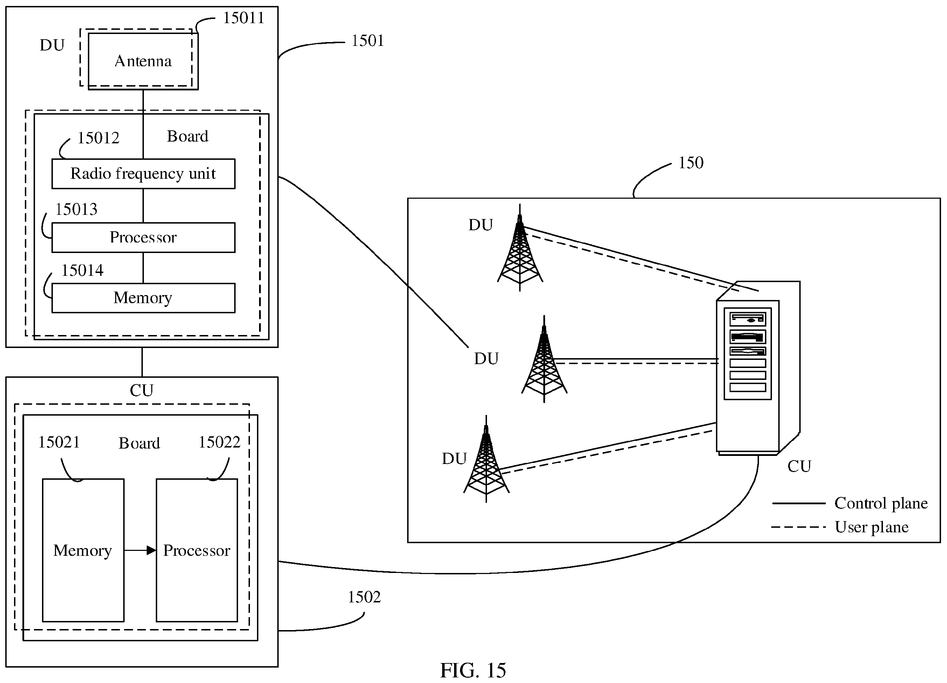

FIG. 15 is a diagram of a structure of an access network device according to an embodiment of this application. The access network device (or a base station) may be used in the system architecture shown in FIG. 1, to perform functions of a first access network device or a second access network device in the foregoing method embodiments. As shown in FIG. 15, the access network device 150 may include one or more DUs 1501 and one or more CUs 1502. The DU 1501 may include at least one antenna 15011, at least one radio frequency unit 15012, at least one processor 15013, and at least one memory 15014. The DU 1501 is mainly configured to: receive and transmit a radio frequency signal, perform conversion between the radio frequency signal and a baseband signal, and perform partial baseband processing. The CU 1502 may include at least one processor 15022 and at least one memory 15021.

The CU 1502 is mainly configured to: perform baseband processing, control the access network device, and the like. The DU 1501 and the CU 1502 may be physically disposed together, or may be physically separated, namely, in a distributed base station. The CU 1502 is a control center of the access network device, may also be referred to as a processing unit, and is mainly configured to complete a baseband processing function. For example, the CU 1502 may be configured to control the access network device to perform an operation procedure related to the access network device in the foregoing method embodiments.

In addition, optionally, the access network device 150 may include one or more radio frequency units, one or more DUs, and one or more CUs. The DU may include at least one processor 15013 and at least one memory 15014, the radio frequency unit may include at least one antenna 15011 and at least one radio frequency unit 15012, and the CU may include at least one processor 15022 and at least one memory 15021.

In an example, the CU 1502 may include one or more boards, and a plurality of boards may jointly support a radio access network (for example, a 5G network) of a single access standard, or may separately support radio access networks (for example, an LTE network, a 5G network, or another network) of different access standards. The memory 15021 and the processor 15022 may serve the one or more boards. In other words, a memory and a processor may be disposed on each board. Alternatively, the plurality of boards may share a same memory and a same processor. In addition, a necessary circuit may further be disposed on each board. The DU 1501 may include one or more boards, and a plurality of boards may jointly support a radio access network (for example, a 5G network) of a single access standard, or may separately support radio access networks (for example, an LTE network, a 5G network, or another network) of different access standards. The memory 15014 and the processor 15013 may serve the one or more boards. In other words, a memory and a processor may be disposed on each board. Alternatively, the plurality of boards may share a same memory and a same processor. In addition, a necessary circuit may further be disposed on each board.

The access network device shown in FIG. 15 can implement all processes related to the access network device in the foregoing method embodiments. Operations and/or functions of the modules in the access network device shown in FIG. 15 are respectively intended to implement corresponding procedures in the foregoing method embodiments. For details, refer to the descriptions in the foregoing method embodiments. To avoid repetition, detailed descriptions are properly omitted herein.

An embodiment of this application further provides a communication system. The communication system may include a terminal and an access network device. The terminal is configured to perform the steps on the terminal side in the foregoing method embodiments, and the access network device is configured to perform the steps on the access network device side in the foregoing method embodiments.

Optionally, the communication system may further include an application server, and the application server is configured to perform the steps on the application server side in the foregoing method embodiments.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing device to generate a machine, so that the instructions executed by a computer or a processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A communication method, wherein the method comprises:
determining, by an access stratum of a terminal, that transmission of a first data frame fails; and
sending, by the access stratum of the terminal, first indication information to an application layer of the terminal, wherein the first indication information indicates that transmission of the first data frame fails.

2. The method according to claim 1, wherein the sending, by the access stratum of the terminal, first indication information to an application layer of the terminal comprises:
sending, by the access stratum of the terminal, an attention AT command to an operating system OS layer of the terminal, wherein the AT command comprises the first indication information; and
sending, by the OS layer of the terminal, the first indication information to the application layer.

3. The method according to claim 2, wherein the sending, by the OS layer of the terminal, the first indication information to the application layer comprises:
sending, by the OS layer of the terminal, the first indication information to the application layer by invoking an application programming interface API.

4. The method according to any one of claims 1 to 3, wherein the first indication information comprises at least one of the following:
a transmission failure indication;
an identifier of the first data frame; or
type information of the first data frame.

5. The method according to any one of claims 1 to 4, wherein the first data frame is an uplink data frame; and the determining, by an access stratum of a terminal, that transmission of a first data frame fails comprises:
when a quantity of data packets whose transmission fails in the first data frame is greater than or equal to a first threshold, determining, by the access stratum of the terminal, that transmission of the first data frame fails; or
when a ratio of a quantity of data packets whose transmission fails in the first data frame to a total quantity of data packets in the first data frame is greater than or equal to a second threshold, determining, by the access stratum of the terminal, that transmission of the first data frame fails.

6. The method according to any one of claims 1 to 4, wherein the first data frame is an uplink data frame or a downlink data frame; and the determining, by an access stratum of a terminal, that transmission of a first data frame fails comprises:
receiving, by the access stratum of the terminal, second indication information from an access network device, wherein the second indication information indicates that transmission of the first data frame fails; and
determining, based on the second indication information, that transmission of the first data frame fails.

7. The method according to claim 6, wherein when the first data frame is a downlink data frame, the method further comprises:
sending, by the application layer of the terminal, an application layer message to an application server, wherein the application layer message comprises the first indication information.

8. The method according to claim 6 or 7, wherein the method further comprises:
receiving, by the access stratum of the terminal, coding recommendation information from the access network device, wherein the coding recommendation information is used to adjust a coding scheme of a data frame after the first data frame; and
sending, by the access stratum of the terminal, the coding recommendation information to the application layer of the terminal.

9. The method according to claim 8, wherein the coding recommendation information comprises at least one of the following:
first information, wherein the first information indicates a recommended coding type for encoding at least one data frame after the first data frame;
second information, wherein the second information indicates a recommended size of a group of pictures GOP; or
third information, wherein the third information indicates a recommended coding rate.

10. The method according to claim 8 or 9, wherein the method further comprises:
sending fourth information to the access network device, wherein the fourth information is used to determine the coding recommendation information.

11. The method according to claim 10, wherein the fourth information comprises at least one of the following:
a coding type of the first data frame;
location information of the first data frame in a GOP;
a size of the GOP;
importance of the first data frame; or
a coding rate used by the application layer of the terminal.

12. The method according to any one of claims 8 to 11, wherein when the first data frame is a downlink data frame, the method further comprises:
sending, by the application layer of the terminal, the coding recommendation information to the application server.

13. A communication method, wherein the method comprises:
determining, by an access stratum of an access network device, that transmission of a first data frame fails, wherein the first data frame is an uplink data frame or a downlink data frame; and
sending, by the access stratum of the access network device, second indication information to a terminal, wherein the second indication information indicates that transmission of the first data frame fails.

14. The method according to claim 13, wherein the determining, by an access stratum of an access network device, that transmission of a first data frame fails comprises:
when a quantity of data packets whose transmission fails in the first data frame is greater than or equal to a fourth threshold, determining, by the access stratum of the access network device, that transmission of the first data frame fails; or
when a ratio of a quantity of data packets whose transmission fails in the first data frame to a total quantity of data packets in the first data frame is greater than or equal to a fifth threshold, determining, by the access stratum of the access network device, that transmission of the first data frame fails.

15. The method according to claim 14, wherein the method further comprises:
obtaining the threshold from the terminal or a core network element.

16. The method according to any one of claims 13 to 15, wherein the second indication information comprises at least one of the following:
a transmission failure indication;
an identifier of the first data frame; or
a type of the first data frame.

17. The method according to any one of claims 13 to 16, wherein the method further comprises:
sending, by the access stratum of the access network device, coding recommendation information to the terminal, wherein the coding recommendation information is used to adjust a coding scheme of a data frame after the first data frame.

18. The method according to claim 17, wherein the coding recommendation information comprises at least one of the following:
first information, wherein the first information indicates a recommended coding type for encoding at least one data frame after the first data frame;
second information, wherein the second information indicates a recommended size of a GOP; or
third information, wherein the third information indicates a recommended coding rate.

19. The method according to claim 17 or 18, wherein the method further comprises:
receiving fourth information from the terminal or the core network element, wherein the fourth information is used to determine the coding recommendation information.

20. The method according to claim 19, wherein the fourth information comprises at least one of the following:
a coding type of the first data frame;
location information of the first data frame in a GOP;
a size of the GOP;
importance of the first data frame; or
a coding rate used by an application layer of the terminal.

21. A communication apparatus, comprising a processor, wherein the processor is coupled to a memory, the memory stores a computer program, and the processor is configured to invoke the computer program in the memory, to enable the communication apparatus to perform the method according to any one of claims 1 to 12 or the method according to any one of claims 13 to 20.

22. A computer-readable storage medium, wherein the storage medium stores a computer program or instructions, and when the computer program or the instructions are executed by a computer, the method according to any one of claims 1 to 12 or the method according to any one of claims 13 to 20 is implemented.

23. A computer program product, wherein when a computer reads and executes the computer program product, the computer is enabled to perform the method according to any one of claims 1 to 12 or the method according to any one of claims 13 to 20.

24. A communication system, wherein the communication system comprises a terminal and an access network device, the terminal is configured to perform the method according to any one of claims 1 to 12, and the access network device is configured to perform the method according to any one of claims 13 to 20.
